# EUROPEAN PATENT SPECIFICATION

(11) **EP 3 126 135 B1**
(45) Date of publication and mention of the grant of the patent: **11.09.2019**
(21) Application number: 15719891.2
(22) Date of filing: 30.03.2015
(51) Int. Cl.: B32B 5/02, B32B 7/12, B32B 15/082, B32B 27/08, B32B 27/12, B32B 27/28, B32B 27/30, B32B 27/36

(54) **MULTILAYER SHEETS, METHODS OF MANUFACTURE, AND ARTICLES FORMED THEREFROM**
MEHRSCHICHTIGE FOLIEN, VERFAHREN ZUR HERSTELLUNG, UND DARAUS HERGESTELLTE ARTIKEL
FEUILLES MULTICOUCHES, PROCÉDÉS DE PRODUCTION, ET ARTICLES FORMÉS DE CES DERNIÈRES

(30) Priority: 31.03.2014 US 201461972639 P
(43) Date of publication of application: 08.02.2017
(73) Proprietor: SABIC Global Technologies B.V., 4612 PX Bergen op Zoom (NL)
(72) Inventor: DAVIS, Michael J., Mount Vernon, Indiana 47620-9367 (US); SYBERT, Paul Dean, Mount Vernon, Indiana 47620-9367 (US); DISCIULLO, Paul, Mount Vernon, Indiana 47620-9367 (US)
(74) Representative: Balder IP Law, S.L.
(86) International application number: PCT/US2015/023383
(87) International publication number: WO 2015/153483

(56) References cited:
- US-A1- 2004 002 559
- US-A1- 2007 129 492
- US-A1- 2013 280 535

## Description

### BACKGROUND

This disclosure relates to multilayer sheets, articles formed therefrom, and their methods of manufacture, and in particular multilayer sheets having flame retardant properties, articles formed therefrom, and their methods of manufacture.

Thermoplastic sheets can be used in interior applications, such as in windows, partition walls, ceiling panels, cabinet walls, storage compartments, galley surfaces, light panels, and the like. All of these applications have stringent flammability safety requirements that the thermoplastic sheets must meet. Particular requirements include smoke density, flame spread, and heat release values.

For example, in the United States, Federal Aviation Regulation (FAR) Part 25.853 sets forth the airworthiness standards for aircraft compartment interiors. The safety standards for aircraft and transportation systems used in the United States include a smoke density test specified in FAR 25.5 Appendix F, Part V Amdt 25-116. Flammability requirements include the "60 second test" specified in FAR 25.853(a) Appendix F, Part I, (a),1,(i) and the heat release rate standard (referred to as the OSU 65/65 standard) described in FAR F25.4 (FAR Section 25, Appendix F, Part IV), or the French flame retardant tests such as, NF-P-92-504 (flame spread) or NF-P-92-505 (drip test).

In another example, the European Union has approved the introduction of a new harmonized fire standard for rail applications, namely EN-45545, to replace all currently active different standards in each member state. This standard imposes stringent requirements on heat release, smoke density, and toxicity, and flame spread properties allowed for materials used in these applications. Smoke density (Ds-4) in EN-45545 is the smoke density after four minutes measured according to ISO 5659-2, heat release in EN-45545 is the maximum average rate of heat emission (MAHRE) measured according to ISO5660-1 and flame spread in EN-45545 is the critical heat flux at extinguishment (CFE) measured according to ISO 5658-2.

To date only a limited number of thermoplastic sheets have been able to pass the tests set forth for interior train or aircraft applications. In addition, the nature of the polymers used often limit interior decorations to colors, gloss levels, and textures.

Accordingly, thermoplastic sheets that can meet or exceed the various fire safety requirements (e.g., in aircraft and train applications) are desired in the industry. It would be a further advantage if the sheets can meet or exceed stringent regulatory requirements while at the same time have aesthetically pleasing decorated or functional features. It would be a further advantage if the sheets can be decorated, functionalized with coatings, and/or thermoformed without an adverse effect on adhesion or heat stability of the sheets. It would be a still further advantage if such sheets have good chemical resistance and cleanability.

US 2007/129492 A1 discloses a multilayer sheet comprising: a base layer comprising a polycarbonatesiloxane-arylate; and a cap layer disposed on a side of the base layer, wherein the cap layer comprises an organosiloxane.

### SUMMARY

Disclosed is a multilayer sheet as defined in appended claim 1. Further embodiments of the sheet are defined in the dependent claims.

Also disclosed is a method for forming the multilayer sheet, the method including coextrusion, laminating, calendaring, coating, or injection molding.

Also disclosed is a thermoformed article comprising the multilayer sheet.

Also disclosed is a molded article comprising the multilayer sheet in combination with an injection molded polymeric substrate to which the sheet is bonded.

### BRIEF DESCRIPTION OF THE DRAWINGS

The above and other aspects, advantages and features of this disclosure will become more apparent by describing in further detail exemplary embodiments thereof with reference to the accompanying drawings, in which:
FIG. 1 is a schematic diagram of an embodiment of a multilayer sheet;
FIG. 2 is a schematic diagram of another embodiment of a multilayer sheet;
FIG. 3 is a schematic diagram of another embodiment of a multilayer sheet;
FIG. 4 is a schematic diagram of another embodiment of a multilayer sheet; and
FIG. 5 is a schematic diagram of another embodiment of a multilayer sheet.

### DETAILED DESCRIPTION

The inventors hereof have found that thermoplastic sheets having improved vertical burn performance can be obtained by forming a multilayer sheet comprising a base layer comprising a polycarbonatesiloxane-arylate and a cap layer comprising a poly(ethylene terephthalate) (PET), polyvinyl fluoride (PVF), polyvinylidene fluoride (PVDF), or a combination comprising at least one of the foregoing. In particular, the "60 second test" specified in FAR 25.853(a) Appendix F, Part I, (a),1,(i) requires a flame time of less than 15 seconds, a burn length of less than 150 mm, and a drip extinguishing time of less than 3 seconds. The base layer alone can not pass the 60 s vertical burn test. However, a PET, a PVF, or a PVDF layer dramatically improves the vertical burn performance of the base layer and a multilayer sheet comprising the base layer and a PET, PVF, or PVDF layer passes the 60 s vertical burn test robustly. The results are surprising because PET is ordinarily considered a fuel for a burn test. Similarly, a thin layer of PVDF or PVF would also not be expected to substantially affect or improve the burn properties of an article, yet upon combining a PVF or a PVDF layer with a base layer, the vertical burn performance of the multilayer sheet is dramatically improved.

The multilayer sheets can further have at least one of the following properties: (i) a two minute integrated heat release rate of less than or equal to 65 kilowatt-minutes per square meter and a peak heat release rate of less than 65 kilowatts per square meter according to Part IV, OSU Heat Release of FAR/JAR 25.853, Amendment 25-116; (ii) a maximum averaged rate of heat emission (MARHE) of less than or equal to 90 kW/m² with 50 kW/m² irradiance level test condition according to ISO 5660-1; and (iii) at the thickness of 1.0 mm, a smoke density of less than or equal to 200 particles after four minutes of burning according to ASTM E662-06. The multilayer sheets are also thermoformable.

The multilayer sheets and articles made therefrom can be used in high traffic areas. In an advantageous feature, the multilayer sheets have good chemical resistance and can be cleaned with aggressive cleaners.

In a further advantageous feature, the multilayer sheets are transparent or translucent. They can be decorated for aesthetics or functionalized to achieve desirable optical or electrical functionality.

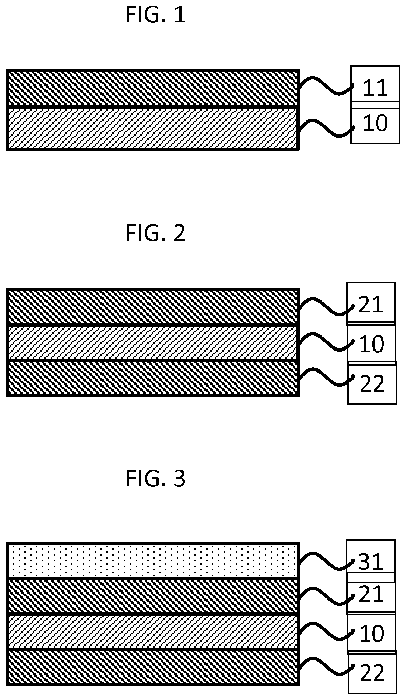

Accordingly, in an embodiment, a multilayer sheet comprises a base layer 10 comprising a polycarbonatesiloxane-arylate and a cap layer 11 comprising poly(ethylene terephthalate), polyvinyl fluoride, polyvinylidene fluoride, or a combination comprising at least one of the foregoing, as shown in FIG. 1, for example. The base layer of the multilayer sheets can also comprise an optional polymer that is not the same as the polycarbonatesiloxane-arylate.

The polycarbonatesiloxane-arylates comprise repeating aromatic carbonate units, siloxane units, and aromatic ester (arylate) units. The carbonate units are repeating units of formula (1) 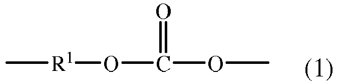 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 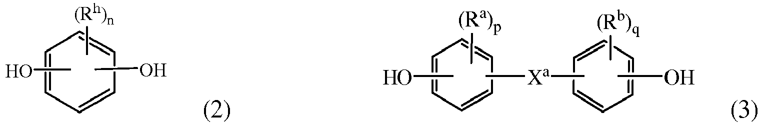 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an embodiment, p and q is each 0, or p and q is each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, - S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Some illustrative examples of specific dihydroxy compounds include bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis (4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA", in which in which each of A¹ and A² is p-phenylene and Y¹ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and from bisphenol A and 1,1-bis(4-hydroxy-3-methylphenyl)-3,3,5-trimethylcyclohexane (isophorone bisphenol).

In an embodiment, the polycarbonate units are present as linear units derived from bisphenol A.

The polycarbonatesiloxane-arylate further comprises arylate units, i.e., ester units based on an aromatic dicarboxylic acid repeating ester units of formula (4) 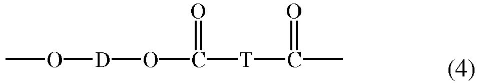 wherein D is a divalent group derived from a dihydroxy compound, and can be, for example, a C₆₋₂₀ alicyclic group or a C₆₋₂₀ aromatic group; and T is a divalent C₆₋₂₀ arylene group. In an embodiment, D is derived from a dihydroxy aromatic compound of formula (2), formula (3) or a combination comprising at least one of the foregoing dihydroxy aromatic compounds. The D and T groups are desirably minimally substituted with hydrocarbon-containing substituents such as alkyl, alkoxy, or alkylene substituents. In an embodiment, less than 5 mol%, specifically less than or equal to 2 mol%, and still more specifically less than or equal to 1 mol% of the combined number of moles of D and T groups are substituted with hydrocarbon-containing substituents such as alkyl, alkoxy, or alkylene substituents.

Examples of aromatic dicarboxylic acids from which the T group in the ester unit of formula (8) is derived include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is 99:1 to 1:99.

In an embodiment, the arylate units are derived from the reaction product of one equivalent of an isophthalic acid derivative and/or terephthalic acid derivative. In such an embodiment, the arylate units of formula (5) 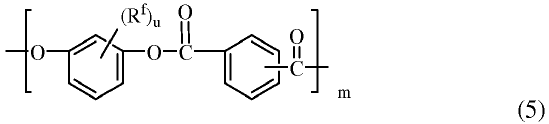 wherein each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4, and m is greater than or equal to 4. In an embodiment, m is 4 to 100, 4 to 50, specifically 5 to 30, more specifically 5 to 25, and still more specifically 10 to 20. In another embodiment, the molar ratio of isophthalate to terephthalate can be about 0.25:1 to about 4.0:1. Preferred arylate units are isophthalate-terephthalate-resorcinol ester units, isophthalate-terephthalate-bisphenol ester units, or a combination comprising each of these, which can be referred to respectively as poly(isophthalate-terephthalate-resorcinol) ester units, poly(isophthalate-terephthalate-bisphenol-A) ester units, and poly[(isophthalate-terephthalate-resorcinol) ester-co-(isophthalate-terephthalate-bisphenol-A)] ester units.

In some embodiments, the carbonate units and the ester units are present as blocks of formula (6) 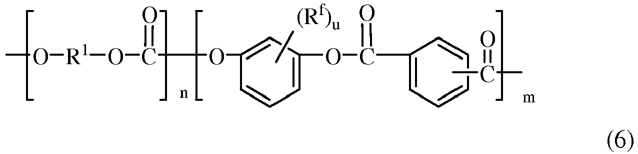 wherein R^{f}, u, and m are as defined in formula (5), each R¹ is independently a C₆₋₃₀ arylene group, and n is greater than or equal to one, for example 3 to 50, specifically from 5 to 25, and more specifically from 5 to 20. In an embodiment, m is 5 to 75 and n is 3 to 50, or m is 10 to 25 and n is 5 to 20, and the molar ratio of isophthalate units to terephthalate units is 80:20 to 20:80. In the foregoing embodiment, the preferred carbonate units are bisphenol A carbonate units, optionally together with resorcinol carbonate units, and the arylate units are poly(isophthalate-terephthalate-resorcinol) ester units, poly(isophthalate-terephthalate-bisphenol-A) ester units, and poly[(isophthalate-terephthalate-resorcinol) ester-co-(isophthalate-terephthalate-bisphenol-A)] ester units. In a specific embodiment, the carbonate and arylate units are present as a poly(isophthalate-terephthalate-resorcinol ester)-co-(resorcinol carbonate)-co-(bisphenol-A carbonate) segment.

The carbonate and arylate segments desirably comprises a minimum amount of saturated hydrocarbon present in the form of substituents or structural groups such as bridging groups or other connective groups. In an embodiment, less than or equal to 25 mol%, specifically less than or equal to 15 mol%, and still more specifically less than or equal to 10 mol% of the combined arylate units and carbonate units comprise alkyl, alkoxy, or alkylene groups. In another embodiment, the arylate ester units and the carbonate units are not substituted with non-aromatic hydrocarbon-containing substituents such as alkyl, alkoxy, or alkylene substituents.

The siloxane units of the polycarbonatesiloxane-arylates are present as polydiorganosiloxane (also referred to herein as "polysiloxane") blocks comprise repeating diorganosiloxane ("siloxane") units as in formula (7) 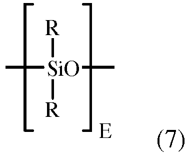 wherein each R is independently a C₁₋₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent polysiloxane-polycarbonate is desired, R is unsubstituted by halogen. Combinations of the foregoing R groups can be used in the same copolymer.

The value of E in formula (7) can vary widely depending on the type and relative amount of each component in the copolymer and composition containing the copolymer, the desired properties of the composition, and like considerations. Generally, E has an average value of 2 to 1,000, specifically 2 to 500, 2 to 200, or 2 to 125, 5 to 80, or 10 to 70. In an embodiment, E has an average value of 10 to 80 or 10 to 40, and in still another embodiment, E has an average value of 40 to 80, or 40 to 70. Where E is of a lower value, e.g., less than 40, it can be desirable to use a relatively larger amount of the polycarbonate-polysiloxane copolymer. Conversely, where E is of a higher value, e.g., greater than 40, a relatively lower amount of the polycarbonate-polysiloxane copolymer can be used.

In an embodiment, the siloxane blocks are of formula (11) 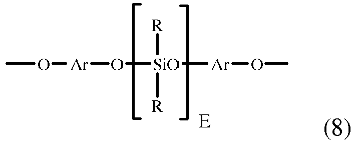 wherein E is as defined in formula (7); each R can be the same or different, and is as defined above; and Ar can be the same or different, and is a substituted or unsubstituted C₆-C₃₀ arylene, wherein the bonds are directly connected to an aromatic moiety. The Ar groups in formula (8) can be derived from a C₆-C₃₀ dihydroxyarylene compound, for example a dihydroxyarylene compound of formula (2) or formula (3). Specific dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used. In an embodiment, the Ar group is derived from resorcinol.

In another embodiment, polydiorganosiloxane blocks are of formula (9) 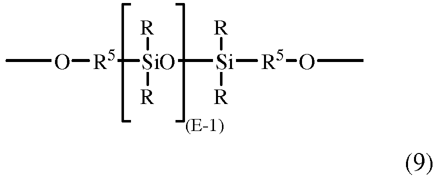 wherein R and E are as described in formula (7), and each R⁵ is independently a divalent C₁-C₃₀ organic group, and wherein the polymerized polysiloxane unit is the reaction residue of its corresponding dihydroxy compound. In a specific embodiment, the polydiorganosiloxane blocks are of formula (10): 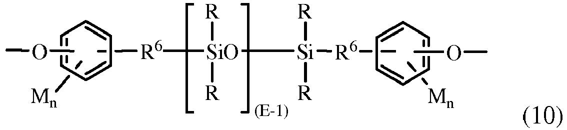 wherein R and E are as defined above. R⁶ in formula (10) is a divalent C₂-C₈ aliphatic. Each M in formula (10) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁-C₃ aliphatic group. Specific siloxane blocks are of the formula 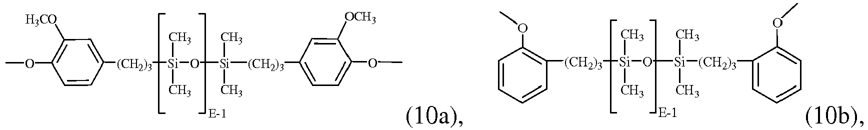 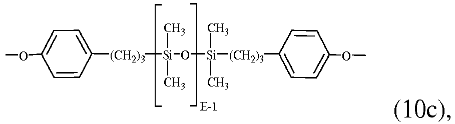 or a combination comprising at least one of the foregoing, wherein E has an average value of 2 to 200, 2 to 125, 5 to 125, 5 to 100, 5 to 50, 20 to 80, or 5 to 20.

Blocks of formula (10) can be derived from the corresponding dihydroxy polydiorganosiloxane, which in turn can be prepared effecting a platinum-catalyzed addition between the siloxane hydride and an aliphatically unsaturated monohydric phenol uch as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The polysiloxane units can then be endcapped, with resorcinol or bisphenol A, for example, by the synthetic procedures of European Patent Application Publication No. 0 524 731 A1 of Hoover. The endcapped polysiloxane can the form an ester-linked structure with a carboxylic acid derivative during formation of the polycarbonatesiloxane-arylate, or a carbonate-linked structure by copolymerization with a carbonate precursor such as chloroformate, or a combination of such structures.

The polycarbonatesiloxane-arylate can be manufactured by different methods such as solution polymerization, interfacial polymerization, and melt polymerization as is known in the art. In an embodiment, the polycarbonatesiloxane-arylate is prepared by interfacial polymerization. Generally, the polycarbonatesiloxane-arylates are provided by the reaction of a diacid derivative, a difunctional polysiloxane, a dihydroxy aromatic compound, and, a carbonyl source, in a biphasic medium comprising an immiscible organic phase and aqueous phase. In an embodiment, the arylate unit is formed by reacting a dihydroxy aromatic compound and a dicarboxylic acid dichloride in a biphasic medium in the presence of a base. The order and timing of addition of these components to the polymerization reaction can be varied to provide a polycarbonatesiloxane-arylate having different distributions of the polysiloxane in the polymer backbone. All types of end groups are contemplated as being useful, e.g., phenol, cyanophenol, or para-cumyl phenol, provided that such end groups do not significantly affect desired properties of the thermoplastic compositions.

In an embodiment, the polycarbonatesiloxane-arylate comprises siloxane units in an amount of 0.5 to 20 mol%, specifically 1 to 10 mol% siloxane units, based on the combined mole percentages of siloxane units, arylate ester units, and carbonate units, and provided that siloxane units are provided by polysiloxane units covalently bonded in the polymer backbone of the polycarbonatesiloxane-arylate.

The polycarbonatesiloxane-arylate comprises siloxane units in an amount of 0.1 to 25 weight percent (wt%). In an embodiment, the polycarbonatesiloxane-arylate comprises siloxane units in an amount of 0.2 to 10 wt%, specifically 0.2 to 6 wt%, more specifically 0.2 to 5 wt%, and still more specifically 0.25 to 2 wt%, based on the total weight of the polycarbonatesiloxane-arylate, with the proviso that the siloxane units are provided by polysiloxane units covalently bonded in the polymer backbone of the polycarbonatesiloxane-arylate; 50 to 99.6 wt% arylate units, and 0.2 to 49.8 wt% carbonate units, wherein the combined weight percentages of the polysiloxane units, arylate units, and carbonate units is 100 wt% of the total weight of the polycarbonatesiloxane-arylate. In another embodiment, the polycarbonatesiloxane-arylate comprises 0.25 to 2 wt% polysiloxane units, 60 to 94.75 wt% arylate units, and 3.25 to 39.75 wt% carbonate units, wherein the combined weight percentages of the polysiloxane units, ester units, and carbonate units is 100 wt% of the total weight of the polycarbonatesiloxane-arylate.

The polycarbonatesiloxane-arylate can have a T_{g} of 115 to 165°C, specifically 120 to 160°C, or 120 to 155°C. The polycarbonatesiloxane-arylate can have an intrinsic viscosity, as determined in chloroform at 25°C, of 0.3 to 1.5 deciliters per gram (dl/g), specifically 0.45 to 1.0 dl/g. The polycarbonatesiloxane-arylate can have a weight average molecular weight (M_{w}) of 10,000 to 100,000 g/mol, as measured by gel permeation chromatography (GPC) using a crosslinked styrene-divinyl benzene column, at a sample concentration of 1 milligram per milliliter, and as calibrated with polycarbonate standards.

In an embodiment, the polycarbonatesiloxane-arylate has flow properties described by the melt volume flow rate (often abbreviated MVR), which measures the rate of extrusion of a thermoplastic polymer through an orifice at a prescribed temperature and load. Polycarbonatesiloxane-arylates suitable for use can have an MVR, measured at 300°C under a load of 1.2 kg according to ASTM D1238-04, of 0.5 to 80 cubic centimeters per 10 minutes (cc/10 min). In a specific embodiment, an exemplary polycarbonate has an MVR measured at 300°C under a load of 1.2 kg according to ASTM D1238-04, of 0.5 to 100 cc/10 min, specifically 1 to 75 cc/10 min, and more specifically 1 to 50 cc/10 min.

In an embodiment, a molded test chip article having a thickness of 2.0 ± 0.12 millimeters and consisting of the polycarbonatesiloxane-arylate can have a light transmittance greater than or equal to 70%, specifically greater than or equal to 80% and more specifically greater than or equal to 85%, according to ASTM D1003-00. In another embodiment, the test chip article having a thickness of 2.0 ± 0.12 millimeters and consisting of the polycarbonate can have a haze less than or equal to 10%, specifically less than or equal to 5%, and most specifically less than or equal to 3%, according to ASTM D1003-00

The base layer can further comprise an additional polymer that is not the same as the polycarbonatesiloxane-arylate. The additional polymer can be a polycarbonate including repeating carbonate units as described above, including homopolycarbonates, copolycarbonates, polycarbonate-esters, polycarbonate-siloxanes, polyesters, polyetherimides, polyetherimide-siloxanes, or a combination comprising at least one of the foregoing.

In an embodiment, the additional polymer is a polycarbonate-ester, in particular an aromatic polycarbonate-ester having aromatic carbonate units of formula (1) and arylate units of formula (5). For example, the aromatic polycarbonate-ester can consist essentially of 50 to 100 mole percent of arylate units of formula (5), and 0 to 50 mole percent aromatic carbonate units derived from bisphenol compounds of formula (3). It is appreciated that the additional polymer can not contain any siloxane units.

A specific example of an aromatic polycarbonate-ester comprises, consists essentially of, or consists of 2 to 20 mol% of bisphenol-A carbonate units of the formula 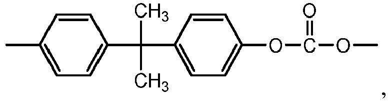 60 to 98 mol% of isophthalic acid-terephthalic acid-resorcinol ester units of the formula 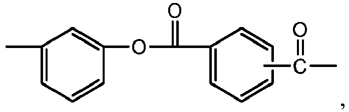 optionally, 1 to 20 mol% resorcinol carbonate units of the formula 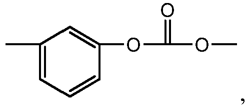 and optionally, isophthalic acid-terephthalic acid-bisphenol-A ester units of the formula

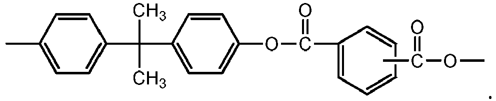

In an embodiment, the additional polymer is an aromatic polycarbonate ester consisting essentially of units of the formula 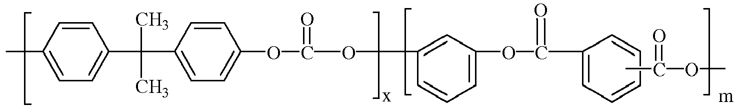 wherein m is 4 to 100, and the mole ratio of x:m is 99:1 to 1:99. In this specific example, the additional polymer does not contain any siloxane group.

In another embodiment the additional polymer is polycarbonate-siloxane, comprising carbonate units of formula (1) and polysiloxane units of formula (7). The polysiloxane-polycarbonate can comprise 50 to 99.9 wt% of carbonate units and 0.1 to 50 wt% siloxane units. Within this range, the polysiloxane-polycarbonate copolymer can comprise 70 to 99 wt% carbonate units, specifically 75 to 98 wt% of carbonate units, and more specifically 80 to 98 wt% of carbonate units, based on the total weight of the polysiloxane-polycarbonate. Also within this range, the polysiloxane-polycarbonate copolymer can comprise 1 to 30 wt% siloxane units, specifically 2 to 25 wt% siloxane units, and specifically 2 to 20 wt% siloxane units, based on the total weight of the polysiloxane-polycarbonate. In an embodiment, the carbonate units are bisphenol A units and the siloxane units are of formula (10).

In an embodiment, the polycarbonate-siloxane can comprise polysiloxane units, and carbonate units derived from bisphenol A, e.g., the dihydroxy aromatic compound of formula (3) in which each of A¹ and A² is p-phenylene and Y¹ is isopropylidene. Polysiloxane-polycarbonates can have an M_{w} of 2,000 to 100,000 g/mol, specifically 5,000 to 50,000 g/mol as measured by GPC using a crosslinked styrene-divinyl benzene column, at a sample concentration of 1 milligram per milliliter, and as calibrated with polycarbonate standards. The polycarbonate-siloxane can have a melt volume flow rate, measured at 300°C under a load of 1.2 Kg, of 1 to 50 cubic centimeters per 10 minutes (cc/10 min), specifically 2 to 30 cc/10 min. Combinations of polycarbonate-siloxanes of different flow properties can be used to achieve the overall desired flow property.

In another embodiment, the additional polymer is a polyester for example, polyesters having repeating units of formula (4) wherein T can be aromatic or aliphatic, and, which include poly(alkylene dicarboxylates), liquid crystalline polyesters, and polyester copolymers. The polyesters described herein are desirably completely miscible with the polycarbonates when blended. Where a polyester is combined with the polycarbonatesiloxane-arylate, the polyester desirably comprises or contributes a minimum amount of saturated hydrocarbon in the form of substituents or structural groups such as bridging groups or other connective groups. In another embodiment, less than or equal to 20 mol%, specifically less than or equal to 10 mol%, and still more specifically less than or equal to 5 mol% of the combined non-arylate ester units, arylate ester units, and carbonate units comprise alkyl, alkoxy, or alkylene groups. In a specific embodiment, less than or equal to 30 mol%, specifically less than or equal to 25 mol%, and still more specifically less than or equal to 20 mol% of the ester units comprise alkyl, alkoxy, or alkylene groups, based on the combined moles of arylate ester units and carbonate units. In another embodiment, the arylate ester units and the carbonate units are not substituted with non-aromatic hydrocarbon-containing substituents.

Examples of polyesters include poly(ethylene terephthalate) (PET), poly(1,4-butylene terephthalate) (PBT), poly(propylene terephthalate) (PPT), poly(ethylene naphthanoate) (PEN), poly(butylene naphthanoate) (PBN), poly(1,4-cyclohexanedimethylene terephthalate) (PCT), poly(1,4-cyclohexanedimethylene terephthalate)-co-poly(ethylene terephthalate), abbreviated as PETG where the polymer comprises greater than or equal to 50 mole% of poly(ethylene terephthalate), and abbreviated as PCTG where the polymer comprises greater than 50 mole% of poly(1,4-cyclohexanedimethylene terephthalate), and poly(1,4-cyclohexane-dimethanol-1,4-cyclohexanedicarboxylate) (PCCD). Preferred polyesters are poly(isophthalate-terephthalate-resorcinol) esters, poly(isophthalate-terephthalate-bisphenol-A) esters, and poly[(isophthalate-terephthalate-resorcinol) ester-co-(isophthalate-terephthalate-bisphenol-A)] ester.

In another embodiment, the additional polymer is polyetherimide or polyetherimide-siloxane. Polyetherimides comprise more than 1, for example 10 to 1000, or 10 to 500, structural units of formula (11) 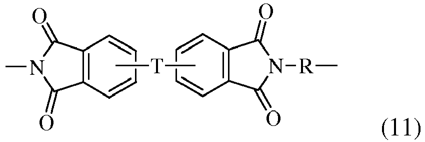 wherein each R is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of formula (12) 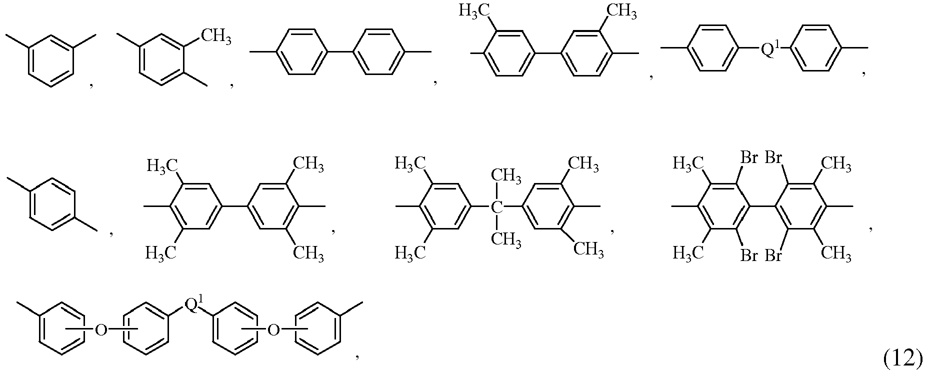 wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}-wherein z is an integer from 1 to 4. In an embodiment R is m-phenylene, p-phenylene, or a diaryl sulfone.

Further in formula (11), T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (11) is also a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary groups Z include groups derived from a dihydroxy compound of formula (13) 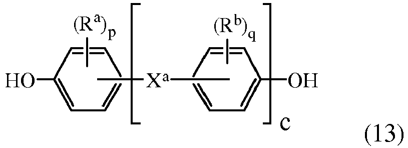 wherein R^{a} and R^{b} can be the same or different and are a halogen atom or a monovalent C₁₋₆ alkyl group, for example ; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (13a) 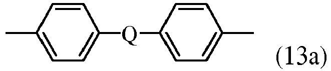 wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment Z is a derived from bisphenol A, such that Q in formula (13a) is 2,2-isopropylidene.

In an embodiment in formula (11), R is m-phenylene or p-phenylene and T is - O-Z-O- wherein Z is a divalent group of formula (13a). Alternatively, R is m-phenylene or p-phenylene and T is -O-Z-O wherein Z is a divalent group of formula (13a) and Q is 2,2-isopropylidene.

In some embodiments, the polyetherimide can be a copolymer, for example, a polyetherimide sulfone copolymer comprising structural units of formula (11) wherein at least 50 mole% of the R groups are of formula (12) wherein Q¹ is -SO₂- and the remaining R groups are independently p-phenylene or m-phenylene or a combination comprising at least one of the foregoing; and Z is 2,2'-(4-phenylene)isopropylidene. Alternatively, the polyetherimide optionally comprises additional structural imide units, for example imide units of formula (14) 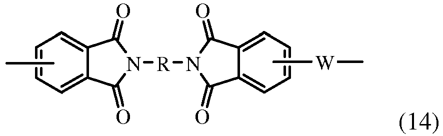 wherein R is as described in formula (11) and W is a linker of the formulas

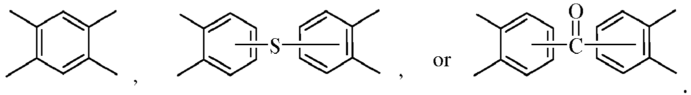

These additional structural imide units can be present in amounts from 0 to 10 mole % of the total number of units, specifically 0 to 5 mole %, more specifically 0 to 2 mole %. In an embodiment no additional imide units are present in the polyetherimide.

The polyetherimide can be prepared by any of the methods well known to those skilled in the art, including the reaction of an aromatic bis(ether anhydride) of formula (15) 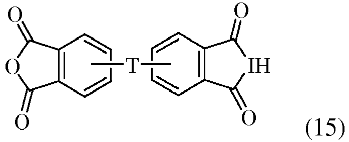 with an organic diamine of formula (16)

H₂N-R-NH₂ (16)

wherein T and R are defined as described above. Copolymers of the polyetherimides can be manufactured using a combination of an aromatic bis(ether anhydride) of formula (15) and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Examples of organic diamines include ethylenediamine, propylenediamine, trimethylenediamine, diethylenetriamine, triethylene tetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone, and bis(4-aminophenyl) ether. Combinations of these compounds can also be used. In some embodiments the organic diamine is m-phenylenediamine, p-phenylenediamine, sulfonyl dianiline, or a combination comprising one or more of the foregoing.

The polyetherimides can have a melt index of 0.1 to 10 grams per minute (g/min), as measured by American Society for Testing Materials (ASTM) D1238 at 340 to 370 °C, using a 6.7 kilogram (kg) weight. In some embodiments, the polyetherimide polymer has a weight average molecular weight (Mw) of 1,000 to 150,000 grams/mole (Dalton), as measured by gel permeation chromatography, using polystyrene standards. In some embodiments the polyetherimide has an Mw of 10,000 to 80,000 Daltons. Such polyetherimide polymers typically have an intrinsic viscosity greater than 0.2 deciliters per gram (dl/g), or, more specifically, 0.35 to 0.7 dl/g as measured in m-cresol at 25 °C.

The thermoplastic composition can also comprise a poly(siloxane-etherimide) copolymer comprising polyetherimide units of formula (11) and siloxane blocks of formula (17) 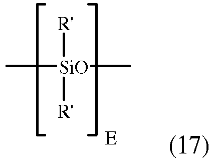 wherein each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no halogens are present. Combinations of the foregoing R groups can be used in the same copolymer. In an embodiment, the polysiloxane blocks comprises R' groups that have minimal hydrocarbon content. In a specific embodiment, an R' group with a minimal hydrocarbon content is a methyl group

The poly(siloxane-etherimide) can be a block or graft copolymer. Block poly(siloxane-etherimide) copolymers comprise etherimide units and siloxane blocks in the polymer backbone. The etherimide units and the siloxane blocks and the can be present in random order, as blocks (i.e., AABB), alternating (i.e., ABAB), or a combination thereof. Graft poly(siloxane-etherimide) copolymers are non-linear copolymers comprising the siloxane blocks connected to linear or branched polymer backbone comprising etherimide blocks.

The poly (siloxane-etherimide)s can be formed by polymerization of an aromatic bisanhydride (14) and a diamine component comprising an organic diamine (16) as described above or mixture of diamines, and a polysiloxane diamine of formula (18) 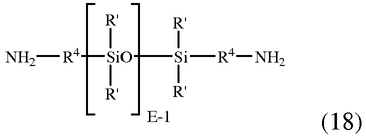 wherein R' and E are as described in formula (17), and R⁴ is each independently a C₂-C₂₀ hydrocarbon, in particular a C₂-C₂₀ arylene, alkylene, or arylenealkylene group. In an embodiment R⁴ is a C₂-C₂₀ alkyl group, specifically a C₂-C₂₀ alkyl group such as propylene, and E has an average value of 5 to 100, 5 to 75, 5 to 60, 5 to 15, or 15 to 40. Procedures for making the polysiloxane diamines of formula (18) are well known in the art.

In some poly(siloxane-etherimide)s the diamine component can contain 10 to 90 mole percent (mol %), or 20 to 50 mol%, or 25 to 40 mol% of polysiloxane diamine (18) and 10 to 90 mol%, or 50 to 80 mol%, or 60 to 75 mol% of diamine (16), for example as described in US Patent 4,404,350. The diamine components can be physically mixed prior to reaction with the bisanhydride(s), thus forming a substantially random copolymer. Alternatively, block or alternating copolymers can be formed by selective reaction of (16) and (18) with aromatic bis(ether anhydrides (15), to make polyimide blocks that are subsequently reacted together. Thus, the poly(siloxane-imide) copolymer can be a block, random, or graft copolymer.

Examples of specific poly(siloxane-etherimide) are described in US Pat. Nos. 4,404,350, 4,808,686 and 4,690,997. In an embodiment, the poly(siloxane-etherimide) has units of formula (19) 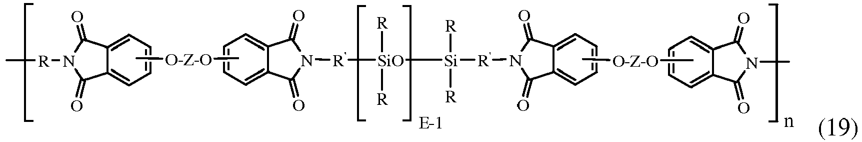 wherein R' and E of the siloxane are as in formula (15), the R and Z of the imide are as in formula (11), R⁴ is the same as R⁴ as in formula (18), and n is an integer from 5 to 100. In a specific embodiment, the R of the etherimide is a phenylene, Z is a residue of bisphenol A, R⁴ is n-propylene, E is 2 to 50, 5, to 30, or 10 to 40, n is 5 to 100, and each R' of the siloxane is methyl.

The relative amount of polysiloxane units and etherimide units in the poly(siloxane-etherimide) depends on the desired properties, and are selected using the guidelines provided herein. In particular, as mentioned above, the block or graft poly(siloxane-etherimide) copolymer is selected to have a certain average value of E, and is selected and used in amount effective to provide the desired wt% of polysiloxane units in the composition. In an embodiment the poly(siloxane-etherimide) comprises 10 to 50 wt%, 10 to 40 wt%, or 20 to 35 wt% polysiloxane units, based on the total weight of the poly(siloxane-etherimide).

When the base layer comprises the polycarbonatesiloxane-arylate and an optional additional polymer, the weight ratio of polycarbonatesiloxane-arylate to additional polymer in the base layer can be, respectively, 1:99 to 99:1, specifically 10:90 to 90:10, more specifically 20:80 to 80:20, and still more specifically 30:70 to 70:30 or 40:60 to 60:40. It is understood that, where an added polymer, combination of polymers, or any other additive is used, the amount and type of the added polymer(s) or additive is selected such that the desired properties of the polycarbonatesiloxane-arylate in the base layer are not substantially adversely affected. In an embodiment only polycarbonate homopolymers or polycarbonate copolymers as described herein are used in the base layer. Thus, in an embodiment, a base layer consists essentially of a polycarbonatesiloxane-arylate and a polycarbonate-containing polymer.

In addition to the polycarbonatesiloxane-arylate, the base layer can include various additives ordinarily incorporated into polymer compositions of this type, with the proviso that the additive(s) are selected so as to not significantly adversely affect the desired properties of the base layer, in particular flame retardancy and transparency or translucence. Such additives can be mixed at a suitable time during the mixing of the components for forming the composition. Additives include impact modifiers, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) can be 0.01 to 5 wt.%, based on the total weight of the polycarbonate composition.

The base layer can comprise a colorant such as a pigment and/or dye additive, used in amounts consistent with the desired transparency or translucence effect. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates, sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, anthrones, dioxazines, phthalocyanines, and azo lakes; Pigment Brown 24, Pigment Red 101, Pigment Red 122, Pigment Red 149, Pigment Red 177, Pigment Red 179, Pigment Red 202, Pigment Violet 29, Pigment Blue 15, Pigment Blue 15:4, Pigment Blue 28, Pigment Blue 60, Pigment Green 7, Pigment Yellow 119, Pigment Yellow 147, or Pigment Yellow 150; or combinations comprising at least one of the foregoing pigments. Pigments can be used in amounts of 0.01 to 10 percent by weight, based on the total weight of the polycarbonatesiloxane-arylate and any additional polymer.

Suitable dyes can be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. Where it is desirable to use organic dyes and pigments, the dyes can be screened to determine their sensitivity to gamma radiation at a given exposure dose or range of exposure doses. Dyes can be used in amounts of 0.01 to 10 percent by weight, based on the total weight of the polycarbonatesiloxane-arylate and any additional polymer.

The base layer can include, provided that the inclusion of the filler or reinforcing agent does not significantly adversely affect the desired properties of the base layer, in particular transparency and/or translucence. In certain embodiments, the fillers can be used to achieve a desired aesthetic effect. The fillers and reinforcing agents can desirably be in the form of nanoparticles, i.e., particles with a median particle size (D₅₀) of less than or equal to 200 nanometers (nm), specifically less than or equal to 100 nm, and more specifically less than or equal to 80 nm, and still more specifically less than or equal to 50 nm. In another embodiment, a nanoparticle has a mean diameter of greater than or equal to 5 nm, specifically greater than or equal to 8 nm, and still more specifically greater than 10 nm, as determined using light scattering methods. Where used, suitable fillers or reinforcing agents include, for example, silicates and silica powders such as zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); glass spheres such as hollow and solid glass spheres, silicate spheres, cenospheres, aluminosilicate (armospheres), or the like; single crystal fibers or "whiskers" such as silicon carbide, alumina, boron carbide, iron, nickel, copper, or the like; fibers (including continuous and chopped fibers) such as carbon fibers and glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Other fillers contemplated herein include visual effects fillers that possess compositional, shape and dimensional qualities suitable to the reflection and/or refraction of light. Visual effect fillers include those having planar facets and can be multifaceted or in the form of flakes, shards, plates, leaves, wafers, and the like. The shape can be irregular or regular. A non-limiting example of a regular shape is a hexagonal plate. Visual effect fillers can be two dimensional, plate-type fillers, wherein a particle of a plate type filler has a ratio of its largest dimension to smallest dimension of greater than or equal to 3:1, specifically greater than or equal to 5:1, and more specifically greater than or equal to 10:1. The largest dimension so defined can also be referred to as the diameter of the particle. Plate-type fillers have a distribution of particle diameters described by a minimum and a maximum particle diameter. The minimum particle diameter is described by the lower detection limit of the method used to determine particle diameter, and corresponds to it. A typical method of determining particle diameters is laser light scattering, which can for example have a lower detection limit for particle diameter of 0.6 nanometers. It should be noted that particles having a diameter less than the lower detection limit can be present but not observable by the method. The maximum particle diameter is typically less than the upper detection limit of the method. The maximum particle diameter herein can be less than or equal to 1,000 micrometers, specifically less than or equal to 750 micrometers, and more specifically less than or equal to 500 micrometers. The distribution of particle diameters can be unimodal, bimodal, or multimodal. The diameter can be described more generally using the mean of the distribution of the particle diameters, also referred to as the mean diameter. Specifically, particles suitable for use herein have a mean diameter of 1 to 100 micrometers, specifically 5 to 75 micrometers, and more specifically 10 to 60 micrometers.

Visual effects fillers can be reflective or refractive. Reflective fillers have an optically dense surface exterior finish useful for reflecting incident light. Metallic and non-metallic fillers such as those based on aluminum, silver, copper, bronze, steel, brass, gold, tin, silicon, alloys of these, combinations comprising at least one of the foregoing metals, and the like, are specifically useful. Also specifically useful are inorganic fillers prepared from a composition presenting a surface that is useful for reflecting and/or refracting incident light. In contrast to a reflective filler, a refractive filler having refractive properties can be at least partially transparent, i.e., can allow transmission of a percentage of incident light, and can provide optical properties based on reflection, refraction, or a combination of reflection and refraction of incident light. Inorganic fillers having light reflecting and/or refracting properties suitable for use herein can include micas, alumina, lamellar talc, silica, silicon carbide, glass, combinations comprising at least one of the foregoing inorganic fillers, and the like.

It is believed that the use of visual effects fillers with polycarbonatesiloxane-arylates can provide an enhancement of the desired visual effects due to the increased transparency and/or lower haze of the polycarbonatesiloxane-arylates relative to compositionally different copolymers having lower transparency and/or greater haze. Such improved visual effects can be observable at a greater depth in the multilayer sheet or an article comprising the polycarbonatesiloxane-arylate than would be observed in the multilayer sheet or the article that does not comprise the polycarbonatesiloxane-arylate. In addition, such an improved appearance of a multilayer sheet or an article comprising the visual effects filler can be obtained without substantially adversely affecting the mechanical properties of the polycarbonatesiloxane-arylate.

The fillers and reinforcing agents can be coated with a layer of metallic material to facilitate conductivity, or surface treated with silanes to improve adhesion and dispersion with the polycarbonatesiloxane-arylate matrix. In addition, the reinforcing fillers can be provided in the form of monofilament or multifilament fibers and can be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Fillers can be used in amounts of 0 to 90 percent by weight, based on the total weight of the polycarbonatesiloxane-arylate and any additional polymer.

The base layer can also include suitable antioxidant additives, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like; or combinations comprising at least one of the foregoing antioxidants. An exemplary antioxidant is SANDOSTAB® P-EPQ phosphite stabilizer, commercially available from Clariant. Antioxidants can be used in amounts of 0.0001 to 1 percent by weight, based on the total weight of the polycarbonatesiloxane-arylate and any additional polymer.

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers can be used in amounts of 0.0001 to 1 percent by weight, based on the total weight of the polycarbonatesiloxane-arylate and any additional polymer.

Light stabilizers and/or ultraviolet light (UV) absorbing additives can also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers can be used in amounts of 0.0001 to 5 percent by weight, based on the total weight of the polycarbonatesiloxane-arylate and any additional polymer.

The base layer can also include an ultraviolet (UV) absorbing additive, also referred to as a UV absorber. Suitable compounds for use as UV absorbing additives include, for example, hydroxybenzophenones; hydroxybenzotriazoles; hydroxybenzotriazines; cyanoacrylates; oxanilides; benzoxazinones; or a combination comprising at least one of the foregoing. Specifically useful commercially available UV absorbers include TINUVIN® 234, TINUVIN® 329, TINUVIN® 350, and TINUVIN® 360, commercially available from Ciba Specialty Chemicals; 2- (2H-benzotriazol-2-yl)-4-(1,1,3,3-tetramethylbutyl)-phenol (CYASORB® 5411), 2-hydroxy-4-n-octyloxybenzophenone (CYASORB® 531), 2-[4,6-bis(2,4-dimethylphenyl)-1,3,5-triazin-2-yl]-5-(octyloxy)-phenol (CYASORB® 1164), 2,2'-(1,4- phenylene)-bis-(4H-3,1-benzoxazin-4-one) (CYASORB® UV- 3638), CYASORB® UV absorbers, available from Cyanamide; and 2,2'-(1,4-phenylene) bis(4H-3,1-benzoxazin-4-one), 1,3-bis[(2-cyano-3,3-diphenylacryloyl)oxy]-2,2-bis[[(2-cyano-3,3-diphenylacryloyl) oxy]methyl] propane, and 1,3-bis[(2-cyano-3,3-diphenylacryloyl)oxy]-2,2-bis[[(2-cyano-3,3-diphenylacryloyl) oxy]methyl]propane (UVINUL® 3030), commercially available from BASF. In addition, UV absorbers can include nano-size inorganic materials such as titanium oxide, cerium oxide, zinc oxide, or the like, all with particle size less than 100 nanometers, can be used. Combinations comprising at least one of the foregoing UV absorbers can be used. UV absorbers can be used in amounts of 0.0001 to 1 percent by weight, based on the total weight of the polycarbonatesiloxane-arylate and any additional polymer.

Plasticizers, lubricants, and/or mold release agents can also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; combinations of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. Such materials can be used in amounts of 0.001 to 1 percent by weight, specifically 0.01 to 0.75 percent by weight, more specifically 0.1 to 0.5 percent by weight, based on the total weight of the polycarbonatesiloxane-arylate and any additional polymer.

The term "antistatic agent" refers to monomeric, oligomeric, or polymeric materials that can be processed into polymer polymers and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium polymers, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) unit copolymers, polyetheresteramide unit copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat® 6321 available from Sanyo, Pebax® MH1657 available from Atofina, or Irgastat® P18 and P22 both available from Ciba-Geigy. Other polymeric materials that can be used as antistatic agents are inherently conducting polymers such as polyaniline (commercially available as PANIPOL®EB from Panipol), polypyrrole and polythiophene (commercially available from Bayer), which retain some of their intrinsic conductivity after melt processing at elevated temperatures. In an embodiment, carbon fibers, carbon nanofibers, carbon nanotubes, carbon black, or any combination of the foregoing can be used in a polymer containing chemical antistatic agents to render the composition electrostatically dissipative. Antistatic agents can be used in amounts of 0.0001 to 5 percent by weight, based on the total weight of the polycarbonatesiloxane-arylate and any additional polymer.

Suitable flame retardants that can be included in the base layer can be organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

One type of exemplary organic phosphate is an aromatic phosphate of the formula (GO)₃P=O, wherein each G is independently an alkyl, cycloalkyl, aryl, alkylaryl, or arylalkyl group, provided that at least one G is an aromatic group. Two of the G groups can be joined together to provide a cyclic group, for example, diphenyl pentaerythritol diphosphate. Other suitable aromatic phosphates can be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 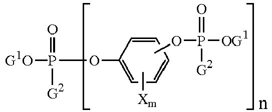 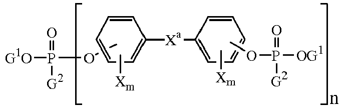 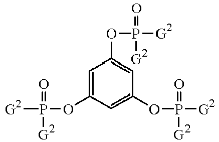 wherein each G¹ is independently a hydrocarbon having 1 to 30 carbon atoms; each G² is independently a hydrocarbon or hydrocarbonoxy having 1 to 30 carbon atoms; each X^{a} is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Specific aromatic organophosphorus compounds have two or more phosphorus-containing groups, and are inclusive of acid esters of formula (20) 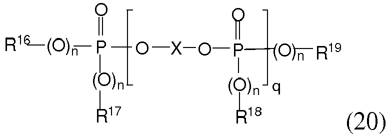 wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which can be OH-substituted and can contain up to 8 ether bonds, provided that at least one of R¹⁶, R¹⁷, R¹⁸, R¹⁹, and X is an aromatic group. In some embodiments R¹⁶, R¹⁷, R¹⁸, and R¹⁹ are each independently C₁₋₄ alkyl, naphthyl, phenyl(C₁₋₄)alkylene, or aryl groups optionally substituted by C₁₋₄ alkyl. Specific aryl moieties are cresyl, phenyl, xylenyl, propylphenyl, or butylphenyl. In some embodiments X in formula (20) is a mono- or poly-nuclear aromatic C₆₋₃₀ moiety derived from a diphenol. Further in formula (20), n is each independently 0 or 1; in some embodiments n is equal to 1. Also in formula (20), q is from 0.5 to 30, from 0.8 to 15, from 1 to 5, or from 1 to 2. In some embodiments, R¹⁶, R¹⁷, R¹⁸ and R¹⁹ are each independently non-alkylated C₆₋₂₀ aryl, and X is a mono- or poly-nuclear aromatic C₆₋₃₀ moiety, n is each independently 0 or 1, and q is from 0.5 to 30.

In these embodiments, each of R¹⁶, R¹⁷, R¹⁸, and R¹⁹ can be aromatic, i.e., phenyl, n is 1, and p is 1-5, specifically 1-2, and X can be represented by the following divalent groups (21), or a combination comprising one or more of these divalent groups, 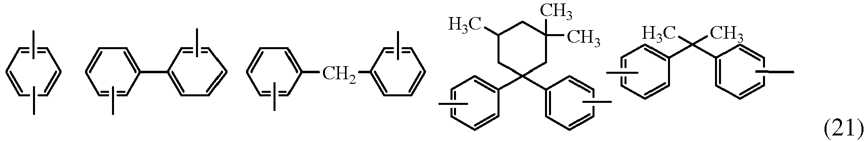 wherein the monophenylene and bisphenol-A groups can be specifically mentioned. In some embodiments at least one of R¹⁶, R¹⁷, R¹⁸, R¹⁹, and X corresponds to a monomer used to form the polycarbonate, e.g., bisphenol-A or resorcinol. In another embodiment, X is derived especially from resorcinol, hydroquinone, bisphenol-A, or diphenylphenol, and R¹⁶, R¹⁷, R¹⁸, R¹⁹, is aromatic, specifically phenyl. A specific aromatic organophosphorus compound of this type is resorcinol bis(diphenyl phosphate), also known as RDP. Another specific class of aromatic organophosphorus compounds having two or more phosphorus-containing groups are compounds of formula (22) 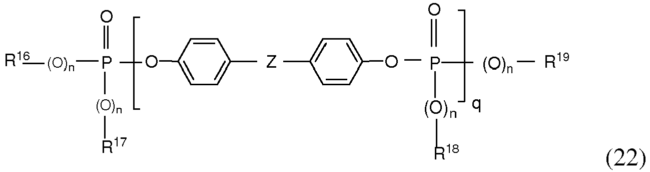 wherein R¹⁶, R¹⁷, R¹⁸, R¹⁹, n, and q are as defined for formula (20) and wherein Z is C₁₋₇ alkylidene, C₁₋₇ alkylene, C₅₋₁₂ cycloalkylidene, -O-, -S-, -SO₂-, or -CO-, specifically isopropylidene. A specific aromatic organophosphorus compound of this type is bisphenol-A bis(diphenyl phosphate), also known as BPADP, wherein R¹⁶, R¹⁷, R¹⁸, and R¹⁹ are each phenyl, each n is 1, and q is from 1 to 5, from 1 to 2, or 1.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide. When present, phosphorus-containing flame retardants can be present in amounts of 0.1 to 10 percent by weight, based on the total weight of the polycarbonatesiloxane-arylate and any additional polymer.

Halogenated materials can also be used as flame retardants, for example 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. When present, halogen containing flame retardants can be present in amounts of 0.1 to 10 percent by weight, based on the total weight of the polycarbonatesiloxane-arylate and any additional polymer.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complexes such as Li₃AlF₆, BaSiF₆, KBF₄, K₃AlF₆, KAlF₄, K₂SiF₆, and/or Na₃AlF₆ or the like. When present, inorganic flame retardant salts can be present in amounts of 0.1 to 5 percent by weight, based on the total weight of the polycarbonatesiloxane-arylate and any additional polymer.

Anti-drip agents can also be used, for example a fibril forming or non-fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN, and can also be used as a flame retardant. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise, for example, 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Alternatively, the fluoropolymer can be pre-blended in some manner with a second polymer, such as for, example, an aromatic polycarbonate SAN to form an agglomerated material for use as an anti-drip agent. Either method can be used to produce an encapsulated fluoropolymer. Antidrip agents can be used in amounts of 0.1 to 5 percent by weight, based on the total weight of the polycarbonatesiloxane-arylate and any additional polymer.

Thus, in an embodiment, the base layer can comprise an additive selected from filler, antioxidant, heat stabilizer, light stabilizer, ultraviolet light absorber, plasticizer, lubricant, mold release agent, antistatic agent, pigment, dye, flame retardant, anti-drip agent, or a combination comprising at least one of the foregoing.

The base layer can comprise two or more sublayers. Each sublayer has the same or different composition. In an embodiment, each sublayer comprises a polycarbonatesiloxane-arylate described herein.

The cap layer of the multilayer sheets includes a PET, PVF, or PVDF layer. The cap layer can be disposed on one or both surfaces of the base layer. In the embodiment shown in FIG. 1, the cap layer 11 is disposed on the base layer 10. When a cap layer is disposed on both surfaces of the base layer, a first cap layer 21 disposed on one surface of the base layer can be the same or different as a second cap layer 22 disposed on the opposing surface of the base layer 10, as shown in FIG. 2. For example, the first cap layer 21 on a first side of the base layer 10 can be a PET layer, and the second cap layer 22 on the opposing second side of the base layer 10 can be a PVF layer.

The multilayer sheets can be prepared by coextrusion, laminating, calendaring, injection molding, or other method suitable for preparing a multilayer sheet. In a specific embodiment, the multilayer sheet is prepared by coextrusion. In a continuous calendaring co-extrusion process, first and second single screw extruders can supply polymer melts for the individual layers (i.e., the base layer and the cap layers disposed on either side of the base layer) into a feed block of an extruder apparatus. A die forms a molten polymeric web that is fed to a three-roll calendaring stack. Commonly, such a calendaring stack can comprise two to four counter-rotating cylindrical rolls with each roll, individually, made from metal (e.g., steel) or rubber coated metal. Each roll can be heated or cooled, as is appropriate.

The molten web formed by the die can be successively squeezed between the calendaring rolls. The inter-roll clearance ("nip") through which the web is drawn determines the thickness of the layers.

After passing through the nip, the molten web can be cooled (e.g., to a temperature less than the T_{g} of the molten material), and can then be passed through pull rolls. A mask can optionally be applied to the cooled sheet to protect the sheet from damage or contamination. The resulting material can be put onto a winder to supply product in roll form, cut on-line into sheeted material, or optionally the roll form can be sheeted off-line and cut into lengths suitable for handling.

In various embodiments, the calendaring roll(s) can comprise a polished roll (e.g., a chrome or chromium plated roll). In other embodiments, the roll(s) can comprise a textured roll (e.g., a roll comprising an elastomeric material (e.g., an EPDM (ethylene propylene diamine monomer) based rubber)), a compliant textured steel roller or belt system, or a textured steel roller (e.g., a roll textured with grit blasting). Suitable materials for the rolls include plastic, metal (e.g., chrome, stainless steel, aluminum, and the like), rubber (e.g., EPDM), ceramic materials, and the like. Furthermore, it is generally noted that the size of the rolls, material of the rolls, number of rolls, the film wrap around the rolls, and the like, can vary with the system employed. Further, it is noted that processing conditions (e.g., the temperature of the calendaring rolls, the line speed, nip pressure, and the like) can also be varied.

The PET, PVF, and PVDF layers can be further metallized. Metallized PET, PVF, and PVDF layers comprise a metal layer disposed onto a surface of these layers. In an embodiment, the metal layer is disposed on a surface of PET, PVF, or PVDF opposite the surface adjacent to the base layer. For example, as shown in FIG. 3, on the first cap layer 21 is disposed a metal layer 31. The metal layer can be disposed onto the surface of the PET, PVF, or PVDF layer with the aid of electrocoating deposition, physical vapor deposition, or chemical vapor deposition or a suitable combination of these methods. Sputtering processes can also be used. The metal layer resulting from the metallizing process (e.g., by vapor deposition) can be 0.001 to 50 micrometers (µm) thick.

Chrome, nickel, aluminum, etc. can be listed as examples of vaporizing metals. Aluminum vapor deposition is used in one embodiment as metal vapor deposition. The surfaces of the PET, PVF, and PVDF layers can be treated with plasma, cleaned or degreased before vapor deposition in order to increase adhesion.

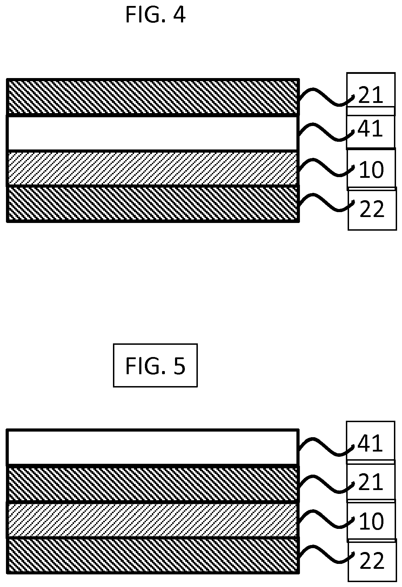

Optionally, the multilayer sheets include an overlay layer comprising polyvinyl chloride (PVC), PVC alloy, acrylic, polyurethane, acrylonitrile butadiene styrene, a polycarbonate homopolymer, a polycarbonate copolymer, or a combination comprising at least one of the foregoing. In an embodiment, an overlay layer 41 can be disposed between the base layer and the cap layer, such as between base layer 10 and first cap layer 21 as shown in FIG. 4. Alternatively, the overlay layer 41 can be disposed on the outer surface of the cap layer, e.g., first cap layer 21, as shown in FIG. 5, for example.

Tie layers are optionally used to improve the adhesion between layers. The optional overlay and tie layers can be added by co-extrusion, inline lamination, offline lamination, press lamination or the like.

The multilayer sheets can be decorated. In use, a surface of the base layer of the multilayer sheet can be subjected to printing with ink. In one embodiment, an exposed surface of the base layer (a surface opposite the surface adjacent to the cap layer) can be subsequently decorated, in particular printed with markings such as alphanumerics, graphics, symbols, indicia, logos, aesthetic designs, multicolored regions, and a combination comprising at least one of the foregoing. The graphic or printed layer can be between two of the base layer sheets.

Those skilled in the art will also appreciate that common curing and surface modification processes including heat-setting, texturing, embossing, corona treatment, flame treatment, plasma treatment, and vacuum deposition can further be applied to the above multilayer sheets to alter surface appearances and impart additional functionalities to the sheets.

Textures can also be imparted to the multilayer sheets using calendaring or embossing techniques. In an embodiment, the molten multilayer sheets can pass through a gap between a pair of rolls with at least one roll having an embossed pattern thereon, to transfer the embossed pattern to a surface of the multilayer sheets. Textures can be applied to control gloss or reflection.

The use of visual effects fillers as disclosed herein in the base layer can also provide an enhancement of the desired visual effects due to the increased transparency and/or lower haze of the polycarbonatesiloxane-arylates relative to compositionally different copolymers having lower transparency and/or greater haze.

The multilayer sheet can have good luminance in which the transparent sheet provides a high level of transmission of incident light (such as for example natural light through a window or skylight, or artificial light) with a minimum light loss by reflectance or scattering, where it is not desirable to either see the light source or other objects on the other side of the sheet or film. A multilayer sheet having a high degree of hiding power (i.e., luminance) allows a significant amount of light through, but is sufficiently diffusive so that a light source or image is not discernable through the panel. Luminance can be provided in a sheet by addition of a diffusive agent such as Tospearl® polymethylsilsesquioxanes available from GE Silicones, crosslinked PMMA, or low levels of TiO₂, added to either to the base layer, the cap layer, or the UV blocking layer, if present. Alternatively, luminance can be provided by including a diffuser film such as Envision™ 3735-50 and Envision™ 3736-60 from the 3M™ company as a component of the multilayer sheets. The diffuser film can be the cap layer itself in the multilayer structure, disposed between the cap layer and the base layer or disposed between the cap layer and the one or more layers of coatings on the cap layer. A diffusive sheet is therefore useful for preparing diffusive components where good luminance (translucence) from the outside or a light source is desired, but where it is not desirable to either see the light source or other objects on the other side of the sheet.

The multilayer sheets can be functionalized. In an embodiment, a thermoformable electrically conductive ink is applied to a layer of the multilayer sheets by methods such as stamping, screen printing, dripping, syringe dispensing, pad printing, and photo-patterning. The ink can be applied as an unbroken layer or in a pattern. A sheet of the multilayer sheets can also be coated with conductive transparent, electrically conductive coatings for final end use such as electrodes for touch-panel, electroluminescent displays, or capacitive switches as examples. The coating can be applied as an unbroken layer or in a pattern. The conductive coatings are included in the multilayer sheets by roll-to-roll or roll-to-sheet techniques. Depending on the end use, electrically conductive features such as electromagnetic shielding elements, antennas can also be built into the multilayer sheets. The electrically conductive coating, electrically conductive coating ink, electrically conductive feature, or a combination comprising at least one of the foregoing, can be is exterior (on an outer layer), within the multilayer sheet (i.e., coated onto an interior layer), or interior to the sheet, i.e., within one or more sheets. In an embodiment the ink or the coating is applied as an outermost layer of the multilayer sheet. In another embodiment, electrically conductive feature is within a sheet..

Single or multiple layers of coatings can also be applied to one or both sides of the multilayer sheets to impart additional properties such as scratch resistance, ultra violet light resistance, aesthetic appeal, and the like. The coating and/or coatings can be applied to a single layer of extruded polycarbonatesiloxane-arylate to generate said multilayer structure. Coatings can be applied through standard application techniques such as rolling, spraying, dipping, brushing, flow coating, or combinations comprising at least one of the foregoing application techniques.

The coating can include a UV blocking layer to provide optical properties such as enhanced weatherability for underlying layers. If present, the UV blocking layer can be disposed on the outer surface of the cap layer. In an exemplary embodiment, the UV blocking layer comprises a polycarbonate which includes a homopolycarbonate, copolycarbonate, a branched polycarbonate, or a combination comprising at least one of the foregoing polycarbonates. Optionally, the UV blocking layer can contain an effective amount of a flame retardant, as previously described. In a specific embodiment, where improved chemical resistance is needed, the UV blocking layer comprises a blend of a polycarbonate with a polyester, such as PCCD. The UV blocking layer also includes at least one UVA, such as, for example, benzotriazoles, o-hydroxybenzophenones, dibenzoylresorcinols, cyanoacrylates, triazines, formamidines, oxanilides and benzoxazinones. Other UVA's can be used without limitation. In a specific embodiment, a UV blocking layer has a thickness 10 to 250 µm. In another specific embodiment, the UV blocking layer comprises 2 to 10 wt% UVA based on the total weight of UV blocking layer. In another specific embodiment, the UV blocking absorber is co-extruded on one or both surfaces side of the multilayer sheet.

In an embodiment, where scratch resistance is desired for the sheet or window, a hard coat can be applied either directly on the cap layer or on the UV block layer coated on the cap layer. Hard coats comprise a hard coat composition that has a hardness after cure that is harder than the hardness of the over-coated article. Desirably, hard coats are also transparent and colorless, and still more desirably, can protect the underlying coated article from exposure to ultraviolet radiation. Hard coats are generally thermosetting, but can be thermoformable or non-thermoformable. Typically, a non-thermoformable hard coat is applied after the article to be hard coated has been shaped to its final shape, whereas a thermoformable hard coat can be applied prior to shaping (e.g., thermoforming, etc.) by coextruding, coating, or other suitable methods, and is subsequently cured to its desired final hardness during or after shaping to form the article. Hard coats can be a single layer of hard coat having sufficient scratch resistance. Hard coats comprise curable (i.e., cross-linkable) polymers, and can be based on hydroxy-containing organic polymers such as novolacs, organosilicon polymers such as polysilsesquioxane copolymers, acrylates, or a combination comprising at least one of the foregoing.

Organosiloxane polymers useful as silicone-based hard coats comprise the structure:

MₐD_{b}T_{c}Q_{d},

wherein the subscripts a, b, c, and d are zero or a positive integer, subject to the limitation that if subscripts a and b are both equal to zero, subscript c is greater than or equal to two; M has the formula R₃SiO_{1/2}; D has the formula R₂SiO_{2/2}; T has the formula RSiO_{3/2}; and Q has the formula SiO_{4/2}, wherein each R group independently represents hydrogen, C₁₋₁₂ alkyl, C₂₋₁₂ alkenyl, C₆₋₁₂ aryl, or C₇₋₁₂ aralkyl. Exemplary alkenyl R-groups include vinyl, allyl, butenyl, pentenyl, hexenyl, and heptenyl, with vinyl being particularly useful. The alkenyl group can be bonded at the molecular chain terminals, in pendant positions on the molecular chain, or both. Other exemplary R groups include alkyl groups such as methyl, ethyl, propyl, butyl, pentyl, and hexyl; aryl groups such as phenyl, tolyl, and xylyl; aralkyl groups such as benzyl and phenethyl; reactive alkyl groups including epoxy end-capped alkyl or cycloalkyl groups such as glycidoxypropyl and (3,4-epoxycyclohexyl)ethyl groups and the like, alkoxysilane-terminated groups such as trialkoxysilylethyl, alkyldialkoxysilylethyl, and the like, as derived from, for example, monomers including glycidoxypropyl trialkoxysilane, glycidoxypropyl dialkoxy alkyl silane, 2,3-epoxycyclohexyl-4-ethyl trialkoxysilane, 2,3-epoxycyclohexyl-4-ethoxyethyl dialkoxyalkylsilane, or a combination comprising at least one of the foregoing alkoxysilane monomers, or (meth)acrylate terminated alkyl groups such as those derived from trialkoxysilylpropyl(meth)acrylates; and halogenated alkyl groups such as 3-chloropropyl and 3,3,3-trifluoropropyl. Methyl and phenyl are specifically useful.

Where at least one organosiloxane polymer is used, the organosiloxane polymer can comprise silanol end groups that are curable in the presence of moisture and an acid or base catalyst. In another embodiment, at least one organosiloxane polymer is used, wherein the organosiloxane polymer comprises one or more reactive groups such as epoxy or (meth)acrylate. Where the reactive groups comprise epoxy groups, the organosiloxane polymer can be cured to form a crosslinked network using dihydroxy organic compounds comprising at least two aromatic hydroxy groups, such as for example, resorcinol, bisphenol-A, or the like.

Alternatively, the hard coat composition comprises a curable hydroxy-containing organic polymer containing hydroxy aromatic groups such as a novolac or a resole polymer. Such polymers can be derived from phenol and/or a singly or multiply C₁₋₁₂ alkyl substituted phenol and an aldehyde such as formaldehyde, acetaldehyde, hexanal, octanal, dodecanal, or the like. The hydroxy-containing organic polymer can be derived from a hydroxystyrene-based polymer such as polyhydroxystyrene. The hydroxy-containing organic polymer can be substituted with reactive, i.e., crosslinkable groups such as epoxy groups. In a specific embodiment, the hydroxy-containing organic polymer is a novolac, an epoxy-substituted novolac, or a combination comprising at least one of the foregoing novolacs. In still another embodiment a carboxylic-acid based polymer can be used, such as poly(meth)acrylic acid-containing polymers, where the carboxylic acid containing polymer is used to crosslink with an epoxy-containing polymer.

In another embodiment, a combination of two polymers is used, wherein least 2 of the R groups in a first organosiloxane polymer are alkenyl groups, and at least 2 of the R groups in a second organosiloxane polymer are hydrogen groups (i.e., silicon hydride groups). The alkenyl-containing organopolysiloxane can have straight chain, partially branched straight chain, branched-chain, or network molecular structure, or can be a mixture of such structures. The alkenyl-containing organopolysiloxane is exemplified by trimethylsiloxy-endblocked dimethylsiloxane-methylvinylsiloxane copolymers; trimethylsiloxy-endblocked methylvinylsiloxane-methylphenylsiloxane copolymers; trimethylsiloxy-endblocked dimethylsiloxane-methylvinylsiloxane-methylphenylsiloxane copolymers; dimethylvinylsiloxy-endblocked dimethylpolysiloxanes; dimethylvinylsiloxy-endblocked methyl vinylpolysiloxanes; dimethyl vinylsiloxy-endblocked methyl vinylphenylsiloxanes; dimethyl vinylsiloxy-endblocked dimethyl vinylsiloxane-methyl vinylsiloxane copolymers; dimethyl vinylsiloxy-endblocked dimethylsiloxane-methylphenylsiloxane copolymers; dimethylvinylsiloxy-endblocked dimethylsiloxane-diphenylsiloxane copolymers; and mixtures comprising at least one of the foregoing organopolysiloxanes.

The hydrogen-containing organopolysiloxane is exemplified by trimethylsiloxy-endblocked methylhydrogenpolysiloxanes; trimethylsiloxy-endblocked dimethylsiloxane-methylhydrogensiloxane copolymers; trimethylsiloxy-endblocked methylhydrogensiloxane-methylphenylsiloxane copolymers; trimethylsiloxy-endblocked dimethylsiloxane-methylhydrogensiloxane-methylphenylsiloxane copolymers; dimethylhydrogensiloxy-endblocked dimethylpolysiloxanes; dimethylhydrogensiloxy-endblocked methylhydrogenpolysiloxanes; dimethylhydrogensiloxy-endblocked dimethylsiloxanes-methylhydrogensiloxane copolymers; dimethylhydrogensiloxy-endblocked dimethylsiloxane-methylphenylsiloxane copolymers; and dimethylhydrogensiloxy-endblocked methylphenylpolysiloxanes.

The hydrogen-containing organopolysiloxane component is used in an amount sufficient to cure the composition, specifically in a quantity that provides from about 1.0 to about 10 silicon-bonded hydrogen atoms per alkenyl group in the alkenyl- containing organopolysiloxane.

Where a combination of organosiloxane polymers, one having alkenyl groups and a second having hydrogen groups is used, the hard coat further comprises, generally as a component of the part containing the organopolysiloxane having at least two alkenyl groups per molecule, a hydrosilylation-reaction catalyst. Effective catalysts promote the addition of silicon-bonded hydrogen onto alkenyl multiple bonds to accelerate the cure. Such catalyst can include a noble metal, such as, for example, platinum, rhodium, palladium, ruthenium, iridium, or a combination comprising at least one of the foregoing. The catalyst can also include a support material, specifically activated carbon, aluminum oxide, silicon dioxide, thermoplastic polymer, and combinations comprising at least one of the foregoing.

Platinum and platinum compounds known as hydrosilylation-reaction catalysts are preferred, and include, for example platinum black, platinum-on-alumina powder, platinum-on-silica powder, platinum-on-carbon powder, chloroplatinic acid, alcohol solutions of chloroplatinic acid, platinum-olefin complexes, platinum-alkenylsiloxane complexes and the catalysts afforded by the microparticulation of the dispersion of a platinum addition-reaction catalyst, as described above, in a thermoplastic polymer such as methyl methacrylate, polycarbonate, polystyrene, silicone, and the like. Mixtures of catalysts can also be used. A quantity of catalyst effective to cure the present composition is used, generally from about 0.1 to about 1,000 parts per million by weight (ppm) of metal (e.g., platinum) based on the combined amounts of the reactive organopolysiloxane components.

Other additives can be included in the coating composition can be included to add or enhance the properties of the hard coat. For example, filler can be used to increase hardness. A specifically useful hard coat filler is a silica filler, which has good dispersibility in the hard coat composition. The silica is desirably of an average particle size of about 10 nm to 100 µm, and can be untreated, or treated with for example, a silane adhesion promoter. Where used, a filler is used in the hard coat in an amount of 0.1 to 50 wt% of the total weight of the organosiloxane polymer. Fillers can also be used for adjusting the refractive index of the coating to match the refractive index of the multilayer substrate, which is advantageous for managing light. Other additives include: methyl vinyl cycloalkyl cure retardants which bind the platinum at room temperature to prevent early cure, but release the platinum at higher temperatures to affect cure; ultraviolet absorbers (UVA's) such as, for example, benzotriazoles and hydroxybenzophenones, silylated UVA's such as 4,6-dibenzoyl-2-(trialkoxysilylalkyl) resorcinols (such as described in U.S. Patent No. 5,391,795 to Pickett) and 4-(y-triethoxysilane)propoxy-2-hydroxybenzophenone (such as those described in U.S. Patent No. 4,373,061 to Ching). UV absorbers, where used, can be included in the composition used to form the UV absorbing layer in an amount of 0.2 to 10 wt%, based on the total weight of the coating composition. In another embodiment, a coating composition is a UV absorbing layer comprising polycarbonate, and additional polymer such as, for example, PCCD. Additives, where used, can be present in an amount of 0.1 to 20 wt%, based on the total weight of the polymer.

The hard coat composition further comprises a solvent, such as water, or a branched or straight chain C₁₋₁₂ alcohol, ether alcohol, diol, polyol, or ether-acetate, or other C₁₋₁₂ organic solvent miscible with these alcohols.

Once coated, the hard coat layer is dried to form the uncured hard coat, and can be cured thermally, or by photo initiation wherein the hard coat composition comprises a photolytic cure catalyst and curable groups reactive with the cure catalyst.

The hard coat can also comprise a primer layer which is disposed on the article to be coated prior to the hard coat layer. Useful primer layers include those based on copolymers comprising C₁₋₁₂ alkyl (meth)acrylates, (meth)acrylic acid, substituted methacrylates such as hydroxyalkyl (meth)acrylates, silane substituted methacrylates including alkoxysilane substituted methacrylates, epoxy-substituted methacrylates, and the like. Other non-(meth)acrylate monomers co-polymerizable with the (meth)acrylate monomers including styrenes, C₁₋₁₂ olefins, C₁₋₁₂ vinyl ethers, C₁₋₁₂ (meth)acrylamides, meth(acrylonitrile), and the like.

Exemplary curable (thermosetting) hard coats comprising a hard coat layer and a primer layer include thermally curable silicone hard coat systems AS4700 hard coat layer with FHP470 primer layer, and AS4000 hard coat layer with SHP401 primer layer, both available from GE Silicones. UV curable hard coats can also be used. An example of a UV curable acrylic hard coat would be UVHC 3000 S (also available from Momentive). Other exemplary hard coats can be prepared according to the compositions and methods described in United States Patent 5,679,820.

In another embodiment requiring additional scratch resistance with the ability to thermoform after hard coating, thermoformable hard coat systems can be used. An example of a thermoformable phenolic hard coat is FMR Clear Coat AEG21153 from Red Spot Paint and Varnish Company. Sheet or film prepared with a coating such as the FMR coating can be thermoformed as described above to give the desired window shape without damaging the hard coat. Other exemplary thermoformable hard coats Examples of suitable thermoformable hard coats can be prepared according to the compositions and methods described in United States Patent 6,350,521.

In another embodiment the multilayer laminate can contain a fabric layer. The fabric layer can be laminated between to base layers or between the base layer and cap layer. The fabric can contain a variety of weaves that provide a variety of aesthetic effects when laminated. In an embodiment, the fabric can be pre-printed with a pattern or design. The fabric can be made of synthetic or natural fibers or a combination thereof. Non-limiting examples of useful fibers comprise wool, cotton, hemp, silk, steel, copper, polyamides (nylons) such as polyhexamethylene adipamide and polycaproamide, polyesters such as polyethylene terephthalate, acrylonitrile polymers and copolymers, vinyl chloride polymers and copolymers, vinylidene chloride polymers and copolymers, polyethylene, tetrafluoroethylene polymers and copolymers, cellulose derivatives such as regenerated cellulose and cellulose acetate, aromatic polyamides (Kevlar amd Nomex), glass, carbon, polybenzoxazole (PBO) (Zylon), polybenzimidazole (PBI), polybenzoxazole (PBO), polypyridobisimidazole (PIPD), rayon, acetate, triacetate, and lyocell, and the like. The fabric can be dyed, nonwoven (e.g., a felt), or woven in various patterns. In addition the fabrics can be printed to give various pictures, patterns, graphics, texts, or combinations thereof.

The overall thickness of the multilayer sheet can be up to and even exceeding several millimeters. More specifically, the multilayer sheet can have a thickness (e.g., gage) of 0.24 mil (6 µm) to 500 mils (12,700 µm), more specifically, 2 mils (50 µm) to 40 mils (1016 µm), and yet more specifically, 4 mils (100 µm) to 30 mils (762 µm). The thickness of the various layers will vary depending on the desired weight% of each layer. The cap layer can be 1% to 50%, 5 to 40, or 10 to 30 of overall thickness.

The multilayer sheets are useful in the production of opaque, translucent, or transparent articles. In an advantageous feature, the multilayer sheets of the disclosure can be thermoformed. It is generally noted that the term "thermoformed" or "thermoforming" is used to describe a method that can comprise the sequential or simultaneous heating and forming of a material onto a mold, wherein the material is originally in the form of a film, sheet, layer, or the like, and can then be formed into a desired shape. Once the desired shape has been obtained, the formed article (e.g., a component of an aircraft window; a passage tray table of the aircraft or train) is cooled below its glass transition temperature. For example, suitable thermoforming methods can include, but are not limited to, mechanical forming (e.g., matched tool forming), membrane assisted pressure/vacuum forming, membrane assisted pressure/vacuum forming with a plug assist, and the like.

In an embodiment, a molded article is also disclosed herein, comprising the above-described multilayer sheet after the sheet is printed (decorated) on a surface(s) thereof with a print (decoration) and bonded to an injection molded polymeric substrate. The coated or uncoated multilayer sheet can be cold formed or thermoformed into a three-dimensional shape matching the three-dimensional shape of the injection molded polymeric substrate. The material for the polymeric substrate can be the polycarbonatesiloxane-arylate disclosed herein. Other polymers such as polyesters can alternatively be used. The material for the polymeric substrate can be the same or different from the material for the base layer.

Also disclosed herein is a method of molding an article, comprising placing the above-described decorative sheet into a mold, and injecting a substrate polymer composition into the mold cavity space behind the decorative sheet, wherein the decorative sheet and the injection molded substrate polymer form a single molded part or article. According to one exemplary embodiment, molded articles are prepared by: printing a decoration on a surface of a multilayer sheet (specifically on the exposed surface of the base layer), for example by screen printing to form a decorative sheet; forming and optionally trimming the decorative sheet into a three-dimensional shape; fitting the decorative sheet into a mold having a surface which matches the three-dimensional shape of the decorative sheet; and injecting a substrate polymer composition, which can be substantially transparent, into the mold cavity behind the decorative sheet to produce a one-piece, permanently bonded three-dimensional article or product.

The decoration for the finished article or product can either be exposed to the environment ("first surface decoration") and/or encapsulated between the decorated sheet and the injected material ("second surface decoration").

For in-mold decoration (IMD) processes, high temperature, formable inks can be used for graphics application. Second surface decoration can employ more robust ink systems to provide adequate ink adhesion during the molding process. Moreover, in applications such as light assemblies where light transmission is important, dye inks can be used rather than pigmented inks so as not to affect light transmission and haze readings. Once the ink is printed, it can be either dried or cured depending on the ink technology used. If the ink is solvent or water based, then a gas fired or electric dryer can be used to dry the ink.

Articles that generate or release only low levels of heat and smoke when exposed to a flame are useful in the transportation industry (aircraft, marine, rail, bus, subway) since the use of such materials increases the time available for the occupants of, for example, an airplane, to escape in event of a fire. Sheet articles can have substantial resistance to color shift or hazing when exposed to UV light. Also depending on the application, the articles can have various levels of opacity, transparency, and diffusive nature. Depending on the service of the part, differing levels of scratch resistance are also required. Finally, depending on the part geometry, the sheet or film can be thermoformed to provide the final shape of an article prepared from the sheet.

For multilayer sheets used in the transportation industry, the heat release rate is typically measured and regulated by the OSU test described herein (FAR/JAR 25.853 Amendment 25-83 Part IV). For many applications, materials need to have a rating of 65/65 (2 min/peak heat release rate). In some applications a rating of 55/55 is required. In the transportation industry, the smoke density is typically measured and regulated by the ASTM E-662 test (FAR/JAR 25.853 Amendment 25-83 Part V FAA Smoke Density). For many applications, materials also must have a smoke density of less than 200.

The multilayer sheets meets 60 s test requirements and further have at least one of the following properties: 1) a two minute integrated heat release rate of less than or equal to 65 kilowatt-minutes per square meter and a peak heat release rate of less than 65 kilowatts per square meter according to Part IV, OSU Heat Release of FAR/JAR 25.853, Amendment 25-116; 2) a maximum averaged rate of heat emission (MARHE) of less than or equal to 90 kW/m² with 50 kW/m² irradiance level test condition according to ISO 5660-1; and 3) at the thickness of 1.0 mm, a smoke density of less than or equal to 200 particles after four minutes of burning according to ASTM E662-06. The multilayer sheets are also thermoformable.

In addition to the heat release, smoke, and toxic gas emission criteria described hereinabove, the sheet can have a low yellowness index (YI), and hence good color capability. The sheet can be tinted or colored as needed, and has good color stability when exposed to UV light.

Articles can be prepared from such sheets or films for the aircraft, marine, bus, subway, or rail transportation industries where low heat release materials and articles are desirable, and can be shaped from the sheets or films to form an article of the desired shape using standard thermoforming techniques. Different articles can be prepared using the different types of sheets or films as described above. For example, opaque articles prepared from opaque sheets or combination of translucent with opaque in a multilayer structure include sidewalls and ceilings panels, other flat panels, or specific thermoformed parts such as contoured panels, hatches, bins, bin doors, window shades (injection molded or thermoformed), air ducts, compartments and compartment doors for storage, luggage, seat parts, arm rests, tray tables, oxygen mask compartment parts, air ducts, window trim, and other parts used in the interior of aircraft, trains, buses, or ships; and the like. Transparent articles prepared from transparent sheets have a high light transmittance and/or low degree of haze. Transparent articles include for example skylights, windows, transparent partitions, lighting, signage and optical displays. Such articles can alternatively have good luminance (i.e., can be translucent), and can be prepared from sheets or films having high luminance. The articles can be flat or have various levels of curvature. Articles having curvature are desirably prepared using thermoformable sheets.

Illustrative articles include cladding or seating for public transportation, access panels, access doors, air flow regulators, air gaspers, air grilles, arm rests, baggage storage doors, balcony components, cabinet walls, ceiling panels, door pulls, door handles, duct housings, enclosures for electronic devices, equipment housings, equipment panels, floor panels, food carts, food trays, galley surfaces, grilles, handles, housings for TVs and displays, light panels, magazine racks, telephone housings, partitions, parts for trolley carts, seat backs, seat components, railing components, seat housings, shelves, side walls, speaker housings, storage compartments, storage housings, toilet seats, tray tables, trays, trim panel, window moldings, window slides, windows, balusters for stairs and balconies, covers for life vests, covers for storage bins, dust covers for windows, layers of an electrochromic device, lenses for televisions, electronic displays, gauges, or instrument panels, light covers, light diffusers, light tubes and light pipes, mirrors, partitions, railings, refrigerator doors, shower doors, sink bowls, trolley cart containers, trolley cart side panels, and the like. The thermoplastic composition is particularly useful in aircraft, specifically a variety of aircraft compartment interior applications. The articles manufactured from the compositions described herein can thus be an aircraft component. In a specific embodiment the articles are interior components for aircraft, including access panels, access doors, access door panels, access door panel call buttons, light covers, light bezels, light fixtures, lighting appliances, air flow regulators, baggage storage doors, display panels, display units, door handles, door pulls, enclosures for electronic devices, food carts, food trays, trolley carts, trolley side walls, grilles, handles, stow bin components, magazine racks, seat components, partitions, mirrors, refrigerator doors, seat backs, arm rests, foot rests, side walls, tray tables, trim panels, windows, window dust covers, and the like. The thermoplastic compositions can be formed (e.g., molded) into sheets that can be used for any of the above mentioned components. It is generally noted that the overall size, shape, thickness, optical properties, and the like of the polycarbonate sheet can vary depending upon the desired application.

The articles can be hard coated and light-diffusive. Examples of light-diffusive aircraft components include partitions (which includes dividers), including bulkhead partitions, and light covers (which includes light domes).

Examples of medium clarity articles include trolley sidewalls, access doors, and access panels.

Examples of high clarity articles include window panes, window dust covers, partitions (which included dividers), light covers (which includes light domes), and glass replacements, for example electronics screens (e.g., a screen for an in-flight entertainment device) and covers for display panels, gauges and plastic mirrors, i.e., transparent sheets that have been rendered opaque on one side, for example by metallization.

The articles can be high impact or medium impact. In either embodiment the articles can be of good colorability. Examples of high-impact articles include panels for access doors and components of trolley carts.

Examples of high-impact articles where good colorability is desired include interior aircraft parts such as stow bin components, magazine racks, seat back components, components of trolley carts, and access door panels.

Examples of medium-impact articles where good colorability is desired include call buttons, light bezels, door pulls, door handles, arm rests, seat components, and foot rests.

The transparent multilayer sheets have special utility in applications requiring clarity, for example any of the above articles or components can be manufactured using the transparent multilayer sheets disclosed herein. In an embodiment, the transparent multilayer sheets are used for the manufacture of balcony components, balusters for stairs and balconies, ceiling panels, covers for life vests, covers for storage bins, dust covers for windows, layers of an electrochromic device, lenses for televisions, electronic displays, gauges, or instrument panels, light covers, light diffusers, light tubes and light pipes, mirrors, partitions, railings, refrigerator doors, shower doors, sink bowls, trolley cart containers, trolley cart side panels, windows, sight glasses, see-through doors, covers for gauges, display films, film used in lighting applications, or the like.

Any of the foregoing articles, but in particular the transparent articles, can further have a hardcoat disposed on a surface of the article to enhance abrasion and scratch resistance, chemical resistance, and the like. Hardcoats are known in the art, and include, for example, various polyacrylates such as hyperbranched polyacrylates, silicones, polyfluoroacrylates, urethane-acrylates, phenolics, perfluorpolyethers, and the like.

The multilayer sheets are further illustrated by the following non-limiting examples.

### EXAMPLES

The materials used in the Examples are described in Table 1.

**Table 1.**

| Abbreviation | Chemical Description | Source, Vendor |
|---|---|---|
| ITR-PC | ITR (Isophthalic acid-terephthalic acid-resorcinol) - bisphenol A copolyestercarbonate copolymer, ester content 83 mol%, interfacial polymerization, Mw 19,000 to 23,000 g/mol, para-cumyl phenol end-capped | SABIC |
| ITR-PC-Si | Polysiloxane-ITR (Isophthalic acid-terephthalic acid-resorcinol) - bisphenol-A copolyestercarbonate copolymer, ester content 83 mol%, siloxane content 1 wt% (average siloxane chain length about 10), interfacial polymerization, Mw = 22,500 to 26,500 g/mol, para-cumyl phenol end-capped | SABIC |
| PET | Poly(ethylene terephthalate) film metalized with chrome | |
| PVF | Polyvinyl fluoride film often sold under the tradename as Tedlar | |
| FR | Aromatic organophosphorus compound | |

### FAR Testing Methods

Vertical Burn was performed according to FAR 25.853(a), Appendix F, Part I, (a),1,(i), on a plaque of 76 x 305 mm with a thickness of 3 mm using a vertical Bunsen burner. Test sample is placed beneath the burner for 60 seconds, after which the burner is removed and the flame time (time in seconds that the specimen continues to flame after burner flame is removed), the average drip extinguishing time (time in seconds that any flaming material continues to flame after falling from specimen) and the average burn length (distance from original specimen's edge to farthest evidence of damage to the specimen in mm) are measured.

### Examples 1-5

A sheet made from a 50:50 blend of ITR-PC and ITR-PC-Si were laminated on one or both sides with a PVF film or a metalized PET film as indicated in Table 2. Various textures were applied. The samples were dried in an oven for 2 days at 60 °C and tested without conditioning to simulate the harshest conditions. The 60 second vertical burn test results are shown in Table 2.

**Table 2.**

| | | Ex1 | Ex2 | Ex3 | Ex4 | CEx5 |
|---|---|---|---|---|---|---|
| Film on 1^{st} side | - | PVF | PVF | PVF | PVF | None |
| Film on 2^{nd} side | - | PVF | PVF | PET | PET | None |
| Finish on 1^{st} side | - | Satin | Satin | Embossed | Brushed | - |
| Finish on 2^{nd} side | - | Satin | Satin | Matte | Brushed Seaglass | - |
| Color/Look | - | Custom Glacier | Custom Pacific | Custom Zuri | Custom Seaglass | - |

| 60s Vertical Burn (FAR 25.853a, Appendix F, Part I, (a),1,(i)), Requirement: Flame time < 15s, Burn Length < 6 inch, Drip extinguishing time < 5 s | | | | | | |
|---|---|---|---|---|---|---|
| Flame time | S | 9 | 9 | 0 | 0 | 50 |
| | S | 0 | 3 | 0 | 0 | 45 |
| | S | 0 | 10 | 0 | 0 | 69 |
| Average | S | 3 | 7.3 | 0 | 0 | 54.7 |
| Burn length | Inch | 2.0 | 2.4 | 2.5 | 2.5 | 1.6 |
| | Inch | 2.5 | 2.0 | 2.7 | 2.3 | 1.8 |
| | Inch | 2.5 | 1.3 | 2.5 | 2.8 | 1.5 |
| Average | Inch | 2.3 | 1.9 | 2.6 | 2.5 | 1.6 |
| Drip extinguishing time | S | 0 | 0 | 0 | 0 | 0 |
| | S | 0 | 0 | 0 | 0 | 0 |
| | S | 0 | 0 | 0 | 0 | 0 |
| Average | S | 0 | 0 | 0 | 0 | 0 |
| 60s Vertical Burn Pass/Fail | - | Pass | Pass | Pass | Pass | Fail |

Example 5 is a comparative example, where the sheet made from ITR-PC-Si/ITR-PC is not laminated on either side. The sample fails the 60 second vertical burn test since the average flame time is 54.7 seconds, which is far exceeding the upper limit of 15 seconds required by FAR 25.853(a).

As shown in Table 2, when a sheet made from ITR-PC-Si/ITR-PC is laminated with PVF films on both sides or laminated with a PVF film on one side and a metallized PET film on the other side, the 60 second vertical burn performance is greatly improved, with all the tested samples (Ex 1- Ex 4) passing the 60 s vertical burn test. The results also indicate that aesthetic effects on the surface of the sample do not have a detrimental effect on the flammability results.

### Examples 6-10

A sheet made from a 50:50 blend of ITR-PC and ITR-PC-Si (80 mil (2032 micrometer) thickness) were laminated on one or both sides with a PVF film or a metalized PET film as indicated in Table 3. Various textures were applied. In this case, the samples were conditioned according to the FAR 25.853 procedure before testing. The total thickness of the laminate structure was 118 mil (457 micrometer). The burn test results are shown in Table 3.

**Table 3.**

| | | Ex6 | Ex7 | Ex8 | Ex9 | Ex10 |
|---|---|---|---|---|---|---|
| Film on 1^{st} side | - | PVF | PVF | PVF | PVF | PVF |
| Film on 2^{nd} side | - | PVF | PET | PET | PVF | PVF |
| Finish on 1^{st} side | - | Emboss | Matte | Matte | Satin | Satin |
| Color Layer | | | | Lt blue PVC layer | | Lt blue PVC layer |
| Finish on 2^{nd} side | - | Matte | Embossed Silver | Emboss Silver | Satin | Satin |
| Color/Look | - | Vena | Vena | Vena | Glacier | Pacific |

| 60s Vertical Burn (FAR 25.853a, Appendix F, Part I, (a),1,(i)), Requirement: Flame time < 15s, Burn Length < 6 inch, Drip extinguishing time < 5 s | | | | | | |
|---|---|---|---|---|---|---|
| Flame time | S | *0 | 7 | 0 | 0 | 0 |
| | S | 0 | 5 | 0 | 0 | 0 |
| | S | 0 | 0 | 0 | 0 | 0 |
| Average | S | 0 | 4 | 0 | 0 | 0 |
| Burn length | Inch | 2.3 | 2.6 | 2.7 | 2.6 | 2.5 |
| | Inch | 2.7 | 3 | 2.9 | 3.1 | 2.6 |
| | Inch | 2.6 | 2.7 | 2.8 | 2.8 | 2.6 |
| Average | Inch | 2.5 | 2.8 | 2.8 | 2.8 | 2.6 |
| Drip extinguishing time | S | None | None | None | None | None |
| | S | None | None | None | None | None |
| | S | None | None | None | None | None |
| Average | S | None | None | None | None | None |
| 60s Vertical Burn Pass/Fail | - | Pass | Pass | Pass | Pass | Pass |

| OSU FAR 25.853 (d) Appendix F, Part IV, Requirements: 2 Min Total Heat Release less than or equal to 65 and the Peak Heat release rate equal to or less than 65 | | | | | | |
|---|---|---|---|---|---|---|
| 2 Min Total | | 44.8 | 29.9 | 34.8 | 29.2 | 27.3 |
| | | 41.3 | 35.7 | 33.8 | 38.9 | 37.3 |
| | | 41.6 | 30.3 | 30.6 | 34.6 | 28.2 |
| Average | | 42.6 | 32 | 33.1 | 34.3 | 30.9 |
| | | | | | | |
| Peak HRR | | 52.0 | 48.4 | 41.6 | 34.3 | 27.2 |
| | | 42.1 | 48.8 | 40.4 | 32.3 | 35.9 |
| | | 47.7 | 40.4 | 43.3 | 37.5 | 35.8 |
| Average | | 47.2 | 45.9 | 41.8 | 34.7 | 33.0 |
| | | | | | | |
| OSU Pass/Fail | - | Pass | Pass | Pass | Pass | Pass |

| FAA Smoke Density FAR 25.853 (d) Appendix F, Part V, Requirements: Ds Max needs to be less than or equal to 200 | | | | | | |
|---|---|---|---|---|---|---|
| Ds @ 4 | | 34 | 37 | 32 | 29 | 51 |
| | | 25 | 20 | 50 | 46 | 125 |
| | | 31 | 21 | 48 | 25 | 39 |
| Average | | 30 | 26 | 43 | 33 | 72 |
| | | | | | | |
| Ds Max | | 34 | 37 | 31 | 29 | 51 |
| | | 25 | 20 | 50 | 46 | 125 |
| | | 31 | 21 | 48 | 25 | 38 |
| Average | | 30 | 26 | 43 | 33 | 72 |
| | | | | | | |
| Smoke density Pass/Fail | | Pass | Pass | Pass | Pass | Pass |

As shown in Table 3, when a sheet made from ITR-PC-Si/ITR-PC is laminated with PVF films on both sides or laminated with a PVF film on one side and a metallized PET film on the other side, the 60 second vertical burn performance is greatly improved, with all the tested samples passing the 60 s vertical burn test. The results also indicate that aesthetic effects on the surface of the sample do not have a detrimental effect on the flammability results.

### Example 11

A blend of 83 mol% of ITR-PC-Si, 6.5 mol% of an aromatic organophosphorus flame retardant (Sol-DP), a phosphite heat stabilizer was compounded with Solvent Violet 36 and Pigment Blue 60 to provide a light blue composition having the properties shown in Table 4.

**Table 4.**

| | | Result |
|---|---|---|
| OSU 2 Min. | KW-MIN-P-M | 36 |
| OSU Peak | KW-P-M2 | 38 |
| Flame out Average FAR 25.853 | Seconds | 1 |
| Burning Particle FAR25.853 | Seconds | 0 |
| Burn Length Average FAR25.853 | Inches | 2.6 |
| NBS Smoke Density | | 48 |

Set forth below are some embodiments of the multilayer sheets, methods of manufacture and articles comprising the same.

In an embodiment, a multilayer sheet comprises: a base layer comprising a polycarbonatesiloxane-arylate; and a cap layer disposed on a side of the base layer, wherein the cap layer comprises poly(ethylene terephthalate), poly(vinyl fluoride), poly(vinylidene fluoride), an organosiloxane, or a combination comprising at least one of the foregoing; wherein the multilayer sheet has at least of the following properties: a flame time of less than 15 seconds, a burn length of less than 150 mm (6 inches) and a drip extinguishing time of less than 3 seconds, each measured using the method of FAR F25.5, in accordance with FAR 25.853(a) at a thickness of 3 mm; a 2 minute integrated heat release rate of less than or equal to 65 kilowatt-minutes per square meter (kW-min/m²) and a peak heat release rate of less than 65 kilowatts per square meter (kW/m²) as measured using the method according to Part IV, OSU Heat Release of FAR/JAR 25.853, Amendment 25-116; a maximum averaged rate of heat emission of less than or equal to 90 kW/m2 with 50 kW/m2 irradiance level test condition according to ISO 5660-1; or at a thickness of 1.0 mm, a smoke density of less than or equal to 200 particles after four minutes of burning according to ASTM E662-06. Optionally, the sheet has a 2 minute integrated heat release rate of less than or equal to 55 kilowatt-minutes per square meter (kW-min/m²) and a peak heat release rate of less than 55 kilowatts per square meter (kW/m²) as measured using the method of FAR F25.4, in accordance with Federal Aviation Regulation FAR 25.853 (d).

The polycarbonatesiloxane-arylate comprises 0.2 to 10 wt% siloxane units, 50 to 99.6 wt% arylate units, specifically isophthalate-terephthalate-resorcinol ester units; and 0.2 to 49.8 wt% carbonate units, bisphenol A carbonate units, bisphenol A carbonate units, resorcinol carbonate units, or a combination thereof, each based on the weight of the polycarbonatesiloxane-arylate; optionally the siloxane units are of the formula 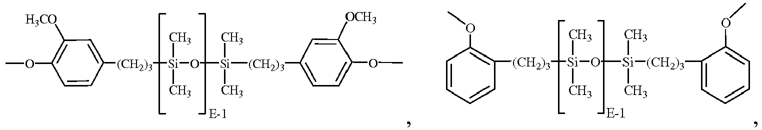 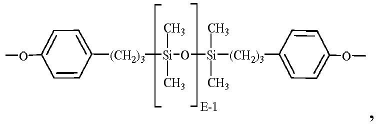 or a combination comprising at least one of the foregoing, wherein E has an average value of 2 to 200.

One or more of the following conditions can apply to the multilayer sheet of any of the above embodiments: (i) the base layer further comprises an additional polymer that is not a polycarbonatesiloxane-arylate; (ii) the additional polymer comprises 2 to 20 mol% of bisphenol-A carbonate units, 60 to 98 mol% of isophthalic acid-terephthalic acid-resorcinol ester units, and optionally, 1 to 20 mol% resorcinol carbonate units; (iii) the additional polymer is present in an amount of 30 to 70 weight percent based on the total weight of the polycarbonatesiloxane-arylate and the additional polymer; (iv) the base layer further comprises a phosphorus-containing flame retardant, optionally present in an amount of more than 0 to 10 weight percent, based on the total weight of the polycarbonatesiloxane-arylate and the additional polymer; (v) the phosphorus-containing flame retardant is of the formula 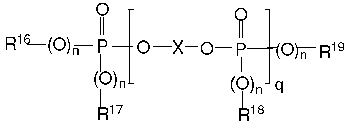 wherein R¹⁶, R¹⁷, R¹⁸ and R¹⁹ are each independently non-alkylated C₆₋₂₀ aryl, specifically each of R¹⁶, R¹⁷, R¹⁸, and R¹⁹ is phenyl, X is a mono- or poly-nuclear aromatic C₆₋₃₀ moiety, specifically 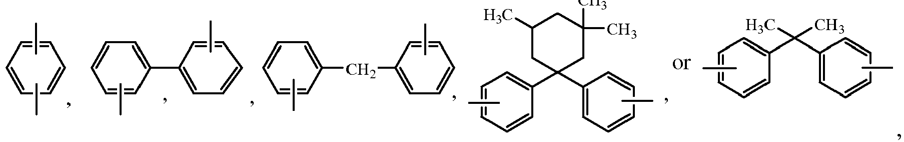 n is each independently 0 or 1, specifically n is 1, and q is from 0.5 to 30, specifically 1-5; (vi) the base layer further comprises a visual effects agent; optionally the flame retardant is BPADP; (vii) the base layer comprises at least two sublayers; (viii) the multilayer sheet further comprises a woven fabric layer disposed between the at least two sublayers; (IX) the multilayer sheet further comprises a woven fabric layer disposed between the base layer and the cap layer; (X) the woven fabric layers is pre-printed with a pattern or design; (XI) the fabric comprises wool, cotton, hemp, silk, steel, copper, glass, carbon, an aliphatic polyamide, an aromatic polyamide, a polyester, a polyacrylonitrile homopolymer, a polyacrylonitrile copolymer, a vinyl chloride homopolymer, a vinyl chloride copolymer, a vinylidene chloride homopolymer, a vinylidene chloride copolymer, a polyethylene, a tetrafluoroethylene homopolymer, a tetrafluoroethylene copolymer, a cellulose derivative, a polybenzoxazole, a polybenzimidazole, a polypyridobisimidazole, a rayon, an acetate, a triacetate, a lyocell, or a combination comprising at least one of the foregoing; (XII) the cap layer is 1% to 50% of overall thickness and the overall thickness is 0.025 mm to 12.7 mm (1 mil to 500 mils); (XIII) the multilayer sheet further comprises a metal layer disposed on the surface of the cap layer opposite the surface adjacent to the base layer; (XIV) the multilayer sheet further comprises a tie layer disposed between the base layer and the cap layer; (XV) the multilayer sheet further comprises an overlay layer disposed between the base layer and the cap layer; (XVI) the overlay layer comprises polyvinyl chloride, polyvinyl chloride alloy, acrylic, polyurethane, acrylonitrile butadiene styrene, polycarbonate homopolymer, polycarbonate copolymer, or a combination comprising at least one of the foregoing; (XVII) the multilayer sheet further comprises a tie layer disposed between the base layer and the overlay layer, or a tie layer disposed between the cap layer and the overlay layer, or a combination thereof; (XVIII) the multilayer sheet further comprises a printed marking; (XIX) the multilayer sheet further comprises a surface texture; (XX) the multilayer sheet further comprises a diffuser film; (XXI) the multilayer sheet further comprises a coating coated on one or both sides of the multilayer sheet; (XXII) the multilayer sheet further comprises an electrically conductive coating, an electrically conductive coating ink, an electrically conductive feature, or a combination comprising at least one of the foregoing, wherein the coating, ink, feature, or combination is exterior or interior to the sheet; (XXIIII) the coating of the multilayer sheet comprises a UV blocking layer or a hard coat; (XXIV) the coating of the multilayer sheet comprises a UV blocking layer disposed on the cap layer and a hard coat disposed on the UV blocking layer; or (XXV) at least one of the base layer, the cap layer, and the coating comprises diffusive polymethylsilsesquioxanes, crosslinked poly(methyl methacrylate), TiO₂, or a combination comprising at least one of the foregoing.

A method for forming a multilayer sheet of any one of foregoing embodiments comprises coextrusion, laminating, calendaring, coating, or injection molding. A method of molding an article comprises placing the multilayer sheet of any one of the foregoing embodiments into a mold, and injecting a substrate polymer into a mold cavity space behind the multilayer sheet to form a single molded article comprising the multilayer sheet and the injection molded substrate polymer.

Also disclosed are articles comprising the multilayer sheet of any one of the above embodiments. The articles can be thermoformed articles comprising the multilayer sheet of any one of the above embodiments. The articles can be molded article comprising the multilayer sheet of any one of the above embodiments in combination with an injection molded polymeric substrate to which the sheet is bonded. For molded articles, optionally the multilayer sheet has been formed into a non-planar three-dimensional shape matching a three-dimensional shape of the injection molded polymeric substrate structure.

The articles can be a display or a train or aircraft interior component, wherein the component is a partition, a room divider, a mirror, life vest holder or life vest window, a seat back, a trim panel, an interior display panel, an interior wall, a side wall, an end wall, a ceiling panel, a door lining, a flap, a box, a hood, a louver, a body shell for a window, a window frame, a window dust cover, window transparencies, a panel in an electochromic window, an enclosure for an electronic device, a door, a luggage rack, a luggage container, an interior side of a gangway membrane, an interior lining of a gangway, or a component of a luggage compartment, a display screen, a protective cover for a display screen, a display unit, a television, a refrigerator door, a tray table, a trolley panel, a food cart, a magazine rack, an air flow regulator, a door, a table, or a seat.

Compounds are described herein using standard nomenclature. A dash ("-") that is not between two letters or symbols is used to indicate a point of attachment for a substituent. For example, -CHO is attached through the carbon of the carbonyl (C=O) group. The singular forms "a," "an," and "the" include plural referents unless the context clearly dictates otherwise. The endpoints of all ranges reciting the same characteristic or component are independently combinable and inclusive of the recited endpoint. The terms "first," "second," and the like herein do not denote any order, quantity, or importance, but rather are used to distinguish one element from another. The notation "± 0.12 mm" means that the indicated measurement can be from an amount that is 0.12 mm lower to an amount that is 0.12 mm higher than the stated value.

The singular forms "a," "an," and "the" include plural referents unless the context clearly dictates otherwise. "Or" means "and/or." The endpoints of all ranges directed to the same component or property are inclusive and independently combinable. Unless defined otherwise, technical and scientific terms used herein have the same meaning as is commonly understood by one of skill in the art to which this invention belongs. As used herein, a "combination" is inclusive of blends, mixtures, alloys, reaction products, and the like.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" and "hydrocarbon" refers broadly to a substituent comprising carbon and hydrogen, optionally with 1 to 3 heteroatoms, for example, oxygen, nitrogen, halogen, silicon, sulfur, or a combination thereof; "alkyl" refers to a straight or branched chain, saturated monovalent hydrocarbon group; "alkylene" refers to a straight or branched chain, saturated, divalent hydrocarbon group; "alkylidene" refers to a straight or branched chain, saturated divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicylic hydrocarbon group having at least three carbon atoms; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound. Unless otherwise indicated, exemplary groups that can be present on a "substituted" position include, but are not limited to, cyano; hydroxyl; nitro; azido; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxy groups; C₆₋₁₀ aryloxy such as phenoxy; C₁₋₆ alkylthio; C₁₋₆ or C₁₋₃ alkylsulfinyl; C1-6 or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ alkylenearyl having 1 to 3 separate or fused rings and from 6 to 18 ring carbon atoms, with benzyl being an exemplary arylalkyl group; or arylalkoxy having 1 to 3 separate or fused rings and from 6 to 18 ring carbon atoms, with benzyloxy being an exemplary arylalkoxy group.

While typical embodiments have been set forth for the purpose of illustration, the foregoing descriptions should not be deemed to be a limitation on the scope herein. Accordingly, various modifications, adaptations, and alternatives can occur to one skilled in the art without departing from the scope herein.

## Claims

1. A multilayer sheet comprising:
a base layer comprising a polycarbonatesiloxane-arylate; and
a cap layer disposed on a side of the base layer, wherein the cap layer comprises poly(ethylene terephthalate), poly(vinyl fluoride), poly(vinylidene fluoride), or a combination comprising at least one of the foregoing;
wherein the multilayer sheet has a flame time of less than 15 seconds, a burn length of less than 150 mm (6 inches), and a drip extinguishing time of less than 3 seconds, each measured using the method of FAR F25.5, in accordance with FAR 25.853(a) at a thickness of 3 mm.

2. The multilayer sheet of claim 1, wherein the multilayer sheet has at least one of the following properties:
i) a 2 minute integrated heat release rate of less than or equal to 65 kilowatt-minutes per square meter (kW-min/m²) and a peak heat release rate of less than 65 kilowatts per square meter (kW/m²) as measured using the method according to Part IV, OSU Heat Release of FAR/JAR 25.853, Amendment 25-116;
ii) a maximum averaged rate of heat emission of less than or equal to 90 kW/m2 with 50 kW/m2 irradiance level test condition according to ISO 5660-1; or
iii) at a thickness of 1.0 mm, a smoke density of less than or equal to 200 particles after four minutes of burning according to ASTM E662-06.

3. The multilayer sheet of claim 1, wherein the polycarbonatesiloxane-arylate comprises
0.2 to 10 wt% siloxane units,
50 to 99.6 wt% arylate units, and
0.2 to 49.8 wt% carbonate units,
each based on the weight of the polycarbonatesiloxane-arylate.

4. The multilayer sheet of any one or more of claims 1 to 3, wherein
the arylate units are isophthalate-terephthalate-resorcinol ester units;
the carbonate units are bisphenol A carbonate units, resorcinol carbonate units, or a combination thereof; and
the siloxane units are of the formula 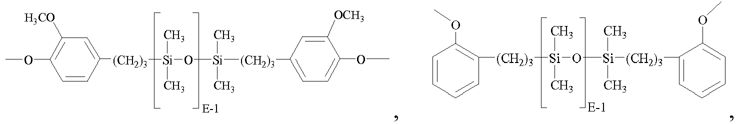 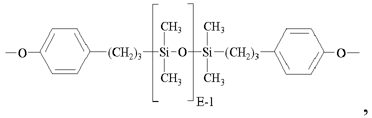 or a combination comprising at least one of the foregoing, wherein E has an average value of 2 to 200.

5. The multilayer sheet of any one of claims 1 to 4, wherein the base layer further comprises an additional polymer that is not a polycarbonatesiloxane-arylate; and
the additional polymer comprises
2 to 20 mol% of bisphenol-A carbonate units,
60 to 98 mol% of isophthalic acid-terephthalic acid-resorcinol ester units, and optionally, 1 to 20 mol% resorcinol carbonate units.

6. The multilayer sheet of claim 5, wherein the additional polymer is present in an amount of 30 to 70 weight percent based on the total weight of the polycarbonatesiloxane-arylate and the additional polymer.

7. The multilayer sheet of any one or more of claims 1 to 6, wherein the base layer further comprises a phosphorus-containing flame retardant in an amount of more than 0 to 10 weight percent, based on the total weight of the polycarbonatesiloxane-arylate and the additional polymer.

8. The multilayer sheet of claim 7, wherein the phosphorus-containing flame retardant is of the formula 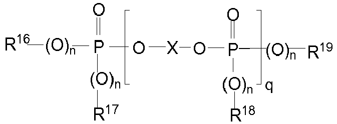 wherein
R¹⁶, R¹⁷, R¹⁸ and R¹⁹ are each independently non-alkylated C₆₋₂₀ aryl, and
X is a mono- or poly-nuclear aromatic C₆₋₃₀ moiety,
n is each independently 0 or 1, and
q is from 0.5 to 30;
wherein preferably
each of R¹⁶, R¹⁷, R¹⁸, and R¹⁹ is phenyl,
X is of the formula 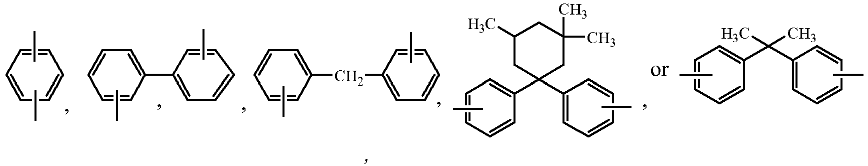
each n is 1, and
p is 1-5; and
optionally the phosphorus-containing flame retardant is bisphenol-A bis(diphenyl phosphate).

9. The multilayer sheet of any one of claims 1 to 8, wherein the sheet further comprises a woven fabric layer disposed between the at least two sublayers or the sheet
further comprises a woven fabric layer disposed between the base layer and the cap layer;
wherein optionally the woven fabric layers is pre-printed with a pattern or design, and
wherein optionally the fabric comprises wool, cotton, hemp, silk, steel, copper, glass, carbon, an aliphatic polyamide, an aromatic polyamide, a polyester, a polyacrylonitrile homopolymer, a polyacrylonitrile copolymer, a vinyl chloride homopolymer, a vinyl chloride copolymer, a vinylidene chloride homopolymer, a vinylidene chloride copolymer, a polyethylene, a tetrafluoroethylene homopolymer, a tetrafluoroethylene copolymer, a cellulose derivative, a polybenzoxazole, a polybenzimidazole, a polypyridobisimidazole, a rayon, an acetate, a triacetate, a lyocell, or a combination comprising at least one of the foregoing.

10. The multilayer sheet of any one of claims 1 to 9, wherein the cap layer is 1% to 50% of overall thickness and the overall thickness is 0.025 mm to 12.7 mm (1 mil to 500 mils).

11. The multilayer sheet of any one of claims 1 to 10, further comprising a metal layer disposed on the surface of the cap layer opposite the surface adjacent to the base layer.

12. The multilayer sheet of any one of claims 1 to 11, further comprising a tie layer disposed between the base layer and the cap layer.

13. The multilayer sheet of any one of claims 1 to 12, wherein the sheet further comprises an overlay layer disposed between the base layer and the cap layer; and
the overlay layer comprises polyvinyl chloride, polyvinyl chloride alloy, acrylic, polyurethane, acrylonitrile butadiene styrene, polycarbonate homopolymer, polycarbonate copolymer, or a combination comprising at least one of the foregoing.

14. The multilayer sheet of claim 13, further comprising a tie layer disposed between the base layer and the overlay layer, or a tie layer disposed between the cap layer and the overlay layer, or a combination thereof.

15. The multilayer sheet of any one of claims 1 to 14, further comprising one or more of the following: a printed marking; a surface texture; a diffuser film; a coating coated on one or both sides of the multilayer sheet; or an electrically conductive coating, an electrically conductive coating ink, an electrically conductive feature, or a combination comprising at least one of the foregoing, wherein the coating, ink, feature, or combination is exterior or interior to the sheet;
wherein the coating comprises a UV blocking layer or a hard coat, or
the coating comprises a UV blocking layer disposed on the cap layer and a hard coat disposed on the UV blocking layer.

16. The multilayer sheet of any one of claims 1 to 15, wherein at least one of the base layer, the cap layer, and the coating comprises diffusive polymethylsilsesquioxanes, crosslinked poly(methyl methacrylate), TiO₂, or a combination comprising at least one of the foregoing.

17. A method for forming a multilayer sheet of any one of claims 1 to 16 comprising coextrusion, laminating, calendaring, coating, or injection molding.

18. An article comprising the multilayer sheet of any one of claims 1 to 16.

19. A molded article comprising the multilayer sheet of any one of claim 1 to 18, in combination with an injection molded polymeric substrate to which the sheet is bonded,
wherein optionally the multilayer sheet has been formed into a non-planar three-dimensional shape matching a three-dimensional shape of the injection molded polymeric substrate structure.

20. A method of molding an article, comprising placing the multilayer sheet of any one of claims 1 to 16 into a mold, and injecting a substrate polymer into a mold cavity space behind the multilayer sheet to form a single molded article comprising the multilayer sheet and the injection molded substrate polymer.

## Patentansprüche

1. Eine mehrlagige Folie, umfassend:
eine Basisschicht mit einem Polycarbonatsiloxanacrylat, und
eine Deckschicht, die auf einer Seite der Basisschicht aufgebracht ist,
wobei die Deckschicht Poly(ethylenterephthalat), Poly(vinylfluorid), Poly(vinylidenfluorid) oder eine Kombination, die wenigstens eines der Vorhergehenden enthält, umfasst,
wobei die mehrlagige Folie
eine Flammzeit von weniger als 15 Sekunden, eine Brennlänge von weniger als 150 mm (6 Inches) und eine Tropfenlöschzeit von weniger als 3 Sekunden hat, wobei jedes davon unter Anwendung der Methode FAR F25.5 in Übereinstimmung mit FAR 25.853 (a) bei einer Dicke von 3 mm gemessen wird.

2. Die mehrlagige Folie gemäß Anspruch 1, wobei die mehrlagige Folie wenigstens eine der folgenden Eigenschaften aufweist:
i) eine 2 Minuten-integrierte Wärmefreisetzungsrate von weniger als oder gleich 65 Kilowattminuten pro Quadratmeter (kW-min/m²) und eine Spitzen-Wärmefreisetzungsrate von weniger als 65 Kilowatt pro Quadratmeter (kW/m²), gemessen unter Anwendung der Methode Part IV, OSU Wärmefreisetzung der FAR/JAR 25.853, Änderung 25-116,
ii) eine maximale Durchschnittsrate der Wärmeemission von weniger als oder gleich 90 kW/m² bei der 50 kW/m²-Bestrahlungsintensitätstestbedingung gemäß ISO 5660-1, oder
iii) eine Dicke von 1,0 mm, eine Rauchdichte von weniger als oder gleich 200 Partikeln nach vier Minuten Brenndauer gemäß ASTM E662-06.

3. Die mehrlagige Folie gemäß Anspruch 1, wobei das Polycarbonatsiloxanacrylat umfasst:
0,2 bis 10 Gew.-% Siloxaneinheiten,
50 bis 99,6 Gew.-% Acrylateinheiten, und
0,2 bis 49,8 Gew.-% Carbonateinheiten,
jeweils basierend auf dem Gewicht des Polycarbonatsiloxanacrylats.

4. Die mehrlagige Folie gemäß einem oder mehreren der Ansprüche 1 bis 3,
wobei die Acrylateinheiten Isophthalat-Terephthalat-Resorcinolestereinheiten sind,
die Carbonateinheiten Bisphenol A-Carbonateinheiten, Resorcinolcarbonateinheiten, oder eine Kombination davon sind, und
die Siloxaneinheiten die Formel 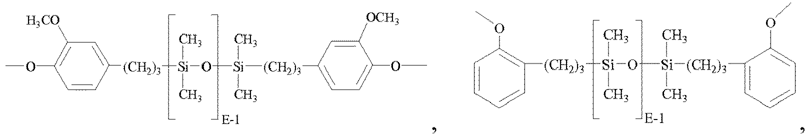 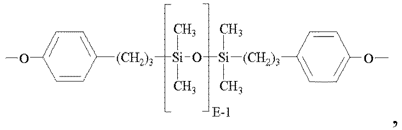 haben,
oder eine Kombination, die wenigstens eine der Vorhergehenden aufweist, wobei E einen mittleren Wert von 2 bis 200 hat.

5. Die mehrlagige Folie gemäß einem der Ansprüche 1 bis 4, wobei die Basisschicht außerdem ein zusätzliches Polymer enthält, das kein Polycarbonatsiloxanacrylat ist, und
das zusätzliche Polymer
2 bis 20 Mol-% Bisphenol A-Carbonateinheiten,
60 bis 98 Mol-% Isophthalsäure-Terephthalsäure-Resorcinolestereinheiten,
und
optional 1 bis 20 Mol-% Resorcinolcarbonateinheiten
enthält.

6. Die mehrlagige Folie gemäß Anspruch 5, wobei das zusätzliche Polymer in einer Menge von 30 bis 70 Gew.-%, bezogen auf das Gesamtgewicht des Polycarbonatsiloxanacrylats und des zusätzlichen Polymers vorliegt.

7. Die mehrlagige Folie gemäß einem oder mehreren der Ansprüche 1 bis 6, wobei die Basisschicht außerdem ein phosphorhaltiges Flammschutzmittel in einer Menge von mehr als 0 bis 10 Gew.-%, bezogen auf das Gesamtgewicht des Polycarbonatsiloxanacrylats und des zusätzlichen Polymers, enthält.

8. Die mehrlagige Folie gemäß Anspruch 7, wobei das phosphorhaltige Flammschutzmittel die Formel 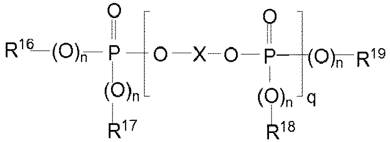 aufweist, worin
R¹⁶, R¹⁷, R¹⁸ und R¹⁹ jeweils unabhängig voneinander nichtalkyliertes C₆-C₂₀-Aryl ist, und
X eine mono- oder polynukleare aromatische C₆-C₃₀-Einheit ist,
n jeweils unabhängig voneinander 0 oder 1 ist, und
q von 0,5 bis 30 ist,
wobei bevorzugt
jedes von R¹⁶, R¹⁷, R¹⁸ und R¹⁹ Phenyl ist,
X die Formel 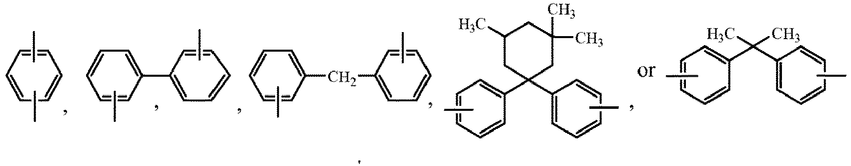
aufweist,
jedes n gleich 1 ist und
p gleich 1 bis 5 ist, und
optional das phosphorhaltige Flammschutzmittel Bisphenol A-Bis(diphenylphosphat) ist.

9. Die mehrlagige Folie gemäß einem der Ansprüche 1 bis 8, wobei die Folie außerdem eine gewebte Textilschicht umfasst, die zwischen den wenigstens zwei Unterschichten liegt oder die Schicht außerdem eine gewebte Textilschicht umfasst, die zwischen der Basisschicht und der Deckschicht liegt,
wobei optional die gewebte Textilschicht mit einem Muster oder einer Darstellung vorbedruckt ist, und
wobei optional das Gewebe Wolle, Baumwolle, Hanf, Seide, Stahl, Kupfer, Glass, Kohlenstoff, ein aliphatisches Polyamid, ein aromatisches Polyamid, einen Polyester, ein Polyacrylonitrilhomopolymer, ein Polyacrylonitrilcopolymer, an Vinylchloridhomopolymer, ein Vinylchloridcopolymer, ein Vinylidenchloridhomopolymer, ein Vinylidenchloridcopolymer, ein Polyethylen, ein Tetrafluorethylenhomopolymer, ein Tetrafluorethylencopolymer, ein Cellulosederivat, ein Polybenzoxazol, ein Polybenzimidazol, ein Polypyridobisimidazol, eine Viskose, ein Acetat, ein Triacetat, ein Lyocell oder eine Kombination, die wenigstens eines der Vorhergehenden enthält, umfasst.

10. Die mehrlagige Folie gemäß einem der Ansprüche 1 bis 9, wobei die Deckschicht 1 bis 50 % der Gesamtdicke ausmacht und die Gesamtdicke 0,025 mm bis 12,7 mm (1 mil bis 500 mils) ist.

11. Die mehrlagige Folie gemäß einem der Ansprüche 1 bis 10, außerdem umfassend eine Metallschicht, die auf der Oberfläche der Deckschicht, gegenüber der zu der Basisschicht benachbarten Oberfläche liegt.

12. Die mehrlagige Folie gemäß einem der Ansprüche 1 bis 11, außerdem umfassend eine Verbindungsschicht, die zwischen der Basisschicht und der Deckschicht liegt.

13. Die mehrlagige Folie gemäß einem der Ansprüche 1 bis 12, wobei die Folie außerdem eine Überzugsschicht umfasst, die zwischen der Basisschicht und der Deckschicht liegt, und
diese Überzugsschicht Polyvinylchlorid, ein Polyvinylchlorid-Kunststoffblend, Acrylsäure, Polyurethan, Acrylonitrilbutadienstyrol, Polycarbonathomopolymer, ein Polycarbonatcopolymer oder eine Kombination, die wenigstens eines der Vorhergehenden enthält, umfasst.

14. Die mehrlagige Folie gemäß Anspruch 13, außerdem umfassend eine Verbindungsschicht, die zwischen der Basisschicht und der Überzugsschicht liegt, oder eine Verbindungsschicht, die zwischen der Deckschicht und der Überzugsschicht liegt, oder eine Kombination davon.

15. Die mehrlagige Folie gemäß einem der Ansprüche 1 bis 14, außerdem umfassend eines oder mehrere der Folgenden: eine gedruckte Markierung, eine Oberflächentextur, einen Diffuser-Film, eine Beschichtung, die auf einer oder beiden Seiten der mehrlagigen Folie aufgebracht ist, oder eine elektrisch leitende Beschichtung, eine elektrisch leitende Beschichtungstinte, ein elektrisch leitendes Feature, oder eine Kombination, die wenigstens eines der Vorhergehenden umfasst, wobei die Beschichtung, die Tinte, das Feature oder die Kombination davon außen oder innerhalb der Folie liegt,
wobei die Beschichtung eine UV-blockierende Schicht oder einen harten Überzug umfasst, oder
die Beschichtung eine UV-blockierende Schicht, die auf der Deckschicht aufgebracht ist, und einen harten Überzug, der auf der UV-blockierenden Schicht aufgebracht ist, umfasst.

16. Die mehrlagige Folie gemäß einem der Ansprüche 1 bis 15, wobei wenigstens eine von der Basisschicht, der Deckschicht und der Beschichtung diffusive Polymethylsilsesquioxane, vernetztes Poly(methylmethacrylat), TiO₂ oder eine Kombination, die wenigstens der Vorhergehenden enthält, umfasst.

17. Ein Verfahren zum Ausbilden einer mehrlagigen Folie gemäß einem der Ansprüche 1 bis 16, umfassend eine Coextrusion, ein Laminieren, Kalandrieren, Beschichten oder Spritzgießen.

18. Ein Gegenstand, der die mehrlagige Folie gemäß einem der Ansprüche 1 bis 16 umfasst.

19. Ein geformter Gegenstand, der die mehrlagige Folie gemäß einem der Ansprüche 1 bis 16, in Kombination mit einem spritzgeformten Polymersubstrat, an das die Folie gebunden ist, umfasst
wobei optional die mehrlagige Folie in eine nichtplanare, dreidimensionale Form, die zu der dreidimensionalen Form der spritzgeformten Polymersubstratstruktur ausgeformt wurde.

20. Ein Verfahren zum Formen eines Gegenstandes, umfassend Einlegen der mehrlagigen Folie gemäß einem der Ansprüche 1 bis 16 in eine Form und das Einspritzen eines Substratpolymers in einen Hohlbereich der Form hinter der mehrlagigen Folie, um einen einzelnen geformten Gegenstand, der die mehrlagige Folie und das spitzgussgeformte Substratpolymer umfasst, auszubilden.

## Revendications

1. Feuille multicouche comprenant
une couche de base comprenant un polycarbonate siloxane-arylate ; et
une couche de couverture disposée sur un côté de la couche de base, laquelle couche de couverture comprend du poly(téréphtalate d'éthylène), du poly(fluorure de vinyle), du poly(fluorure de vinylidène), ou une combinaison comprenant au moins l'un des précédents ;
laquelle feuille multicouche a
une durée de flamme inférieure à 15 secondes, une longueur de combustion inférieure à 150 mm (6 pouces), et un temps d'extinction de goutte inférieur à 3 secondes, chacun mesuré conformément à la méthode de la norme FAR F25.5, conformément à la norme FAR 25.853(a) pour une épaisseur de 3 mm.

2. Feuille multicouche selon la revendication 1, laquelle feuille multicouche a au moins l'une des propriétés suivantes :
i) un débit calorifique intégré sur 2 minutes inférieur ou égal à 65 kilowatt-minutes par mètre carré (kW-min/m²) et un débit calorifique maximal inférieur à 65 kilowatts par mètre carré (kW/m²), tels que mesurés conformément à la méthode de la Partie IV, OSU Heat Release of FAR/JAR 25.853, révision 25-116 ;
ii) un taux moyen maximal d'émission de chaleur inférieur ou égal à 90 kW/m² dans des conditions de test de niveau d'irradiation de 50 kW/m² conformément à la norme ISO 5660-1 ; ou
iii) pour une épaisseur de 1,0 mm, une densité de fumée égale ou inférieure à 200 particules après quatre minutes de combustion conformément à la norme ASTM E662-06.

3. Feuille multicouche selon la revendication 1, dans laquelle le polycarbonatesiloxane-arylate comprend
0,2 à 10 % en poids de motifs siloxane,
50 à 99,6 % en poids de motifs arylate, et
0,2 à 49,8 % en poids de motifs carbonate,
chacun par rapport au poids du polycarbonatesiloxane-arylate.

4. Feuille multicouche selon l'une quelconque ou plusieurs des revendications 1 à 3, dans laquelle
les motifs arylate sont des motifs isophtalate-téréphtalate-ester de résorcinol ;
les motifs carbonate sont des motifs carbonate de bisphénol A, des motifs carbonate de résorcinol, ou une combinaison de ceux-ci ; et
les motifs siloxane sont de formule 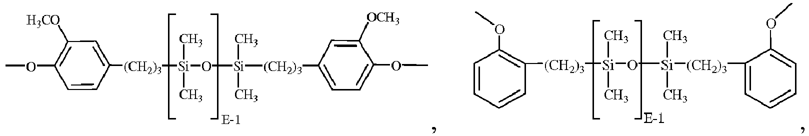 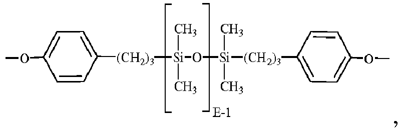 ou une combinaison comprenant au moins l'un des précédents, où E vaut en moyenne de 2 à 200.

5. Feuille multicouche selon l'une quelconque des revendications 1 à 4, dans laquelle la couche de base comprend en outre un polymère additionnel qui n'est pas un polycarbonatesiloxane-arylate ; et
le polymère additionnel comprend
2 à 20 % en moles de motifs carbonate de bisphénol A,
60 à 98 % en moles de motifs acide isophtalique-acide téréphtalique-ester de résorcinol, et
éventuellement 1 à 20 % en moles de motifs carbonate de résorcinol.

6. Feuille multicouche selon la revendication 5, dans laquelle le polymère additionnel est présent en une quantité de 30 à 70 % en poids par rapport au poids total du polycarbonatesiloxane-arylate et du polymère additionnel.

7. Feuille multicouche selon l'une quelconque ou plusieurs des revendications 1 à 6, dans laquelle la couche de base comprend en outre un retardateur d'inflammation contenant du phosphore en une quantité de plus de 0 à 10 % en poids, par rapport au poids total du polycarbonatesiloxane-arylate et du polymère additionnel.

8. Feuille multicouche selon la revendication 7, dans laquelle le retardateur de flamme contenant du phosphore est de formule 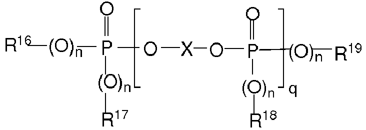 dans laquelle
chacun de R¹⁶, R¹⁷, R¹⁸ et R¹⁹ est indépendamment un aryle en C₆ à C₂₀ non alkylé, et
X est un fragment en C₆ à C₃₀ aromatique mono- ou poly-nucléaire,
chaque n vaut indépendamment 0 ou 1, et
q vaut de 0,5 à 30 ;
dans laquelle de préférence
chacun de R¹⁶, R¹⁷, R¹⁸ et R¹⁹ est phényle,
X est de formule 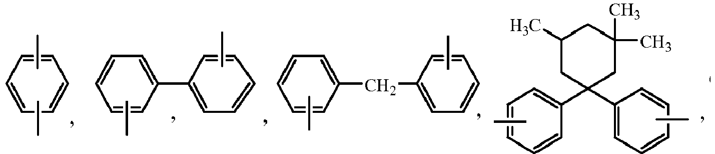
ou 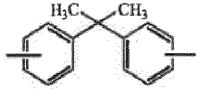
chaque n vaut 1, et
p vaut de 1 à 5 ; et
éventuellement le retardateur d'inflammation contenant du phosphore est le bis(diphénylphosphate) de bisphénol A.

9. Feuille multicouche selon l'une quelconque des revendications 1 à 8, laquelle feuille comprend en outre une couche d'étoffe tissée disposée entre les au moins deux sous-couches, ou bien laquelle feuille comprend en outre une couche d'étoffe tissée disposée entre la couche de base et la couche de couverture ;
dans laquelle éventuellement la couche d'étoffe tissée est pré-imprimée avec un motif ou un dessin, et
dans laquelle éventuellement l'étoffe comprend de la laine, du coton, du chanvre, de la soie, de l'acier, du cuivre, du verre, du carbone, un polyamide aliphatique, un polyamide aromatique, un polyester, un homopolymère de polyacrylonitrile, un copolymère de polyacrylonitrile, un homopolymère de chlorure de vinyle, un copolymère de chlorure de vinyle, un homopolymère de chlorure de vinylidène, un copolymère de chlorure de vinylidène, un polyéthylène, un homopolymère de tétrafluoroéthylène, un copolymère de tétrafluoroéthylène, un dérivé cellulosique, un polybenzoxazole, un polybenzimidazole, un polypyridobisimidazole, une rayonne, un acétate, un triacétate, un lyocell, ou une combinaison comprenant au moins l'un des précédents.

10. Feuille multicouche selon l'une quelconque des revendications 1 à 9, dans laquelle la couche de couverture représente 1 % à 50 % de l'épaisseur globale, et l'épaisseur globale est de 0,025 mm à 12,7 mm (1 mil à 500 mils).

11. Feuille multicouche selon l'une quelconque des revendications 1 à 10, comprenant en outre une couche métallique disposée sur la surface de la couche de couverture opposée à la surface adjacente à la couche de base.

12. Feuille multicouche selon l'une quelconque des revendications 1 à 11, comprenant en outre une couche de liaison disposée entre la couche de base et la couche de couverture.

13. Feuille multicouche selon l'une quelconque des revendications 1 à 12, dans laquelle la feuille comprend en outre une couche de recouvrement disposée entre la couche de base et la couche de couverture ; et
la couche de recouvrement comprend du poly(chlorure de vinyle), un alliage de poly(chlorure de vinyle), un acrylique, du polyuréthane, de l'acrylonitrile-butadiène-styrène, un homopolymère de polycarbonate, un copolymère de polycarbonate, ou une combinaison comprenant au moins l'un des précédents.

14. Feuille multicouche selon la revendication 13, comprenant en outre une couche de liaison disposée entre la couche de base et la couche de recouvrement, ou une couche de liaison disposée entre la couche de couverture et la couche de recouvrement, ou une combinaison de celles-ci.

15. Feuille multicouche selon l'une quelconque des revendications 1 à 14, comprenant en outre un ou plusieurs des suivants : un marquage imprimé : une texture de surface ; un film diffuseur ; un revêtement déposé sur l'un ou sur les deux côtés de la feuille multicouche ; ou un revêtement électriquement conducteur, une encre de revêtement électriquement conductrice, un élément électriquement conducteur, ou une combinaison comprenant au moins l'un des précédents, dans laquelle le revêtement, l'encre, l'élément ou la combinaison est extérieur ou intérieur à la feuille ;
dans laquelle le revêtement comprend une couche bloquant les UV ou un revêtement dur, ou
le revêtement comprend une couche bloquant les UV disposée sur la couche de recouvrement et un revêtement dur disposé sur la couche bloquant les UV.

16. Feuille multicouche selon l'une quelconque des revendications 1 à 15, dans laquelle au moins l'un parmi la couche de base, la couche de couverture et le revêtement comprend des polyméthylsilsesquioxanes diffusifs, du poly(méthacrylate de méthyle) réticulé, du TiO₂, ou une combinaison comprenant au moins l'un des précédents.

17. Méthode de formation d'une feuille multicouche de l'une quelconque des revendications 1 à 16, comprenant une coextrusion, une stratification, un calandrage, un revêtement ou un moulage par injection.

18. Article comprenant la feuille multicouche de l'une quelconque des revendications 1 à 16.

19. Article moulé comprenant la feuille multicouche de l'une quelconque des revendications 1 à 18, en combinaison avec un substrat polymère moulé par injection auquel la feuille est collée,
dans lequel éventuellement la feuille multicouche a été formée sous une forme tridimensionnelle non plane correspondant à une forme tridimensionnelle de la structure du substrat polymère moulé par injection.

20. Méthode de moulage d'un article, comprenant le placement de la feuille multicouche de l'une quelconque des revendications 1 à 16 dans un moule, et l'injection d'un polymère de substrat dans une espace de cavité de moule sous la feuille multicouche pour former un seul article moulé comprenant la feuille multicouche et le polymère de substrat moulé par injection.
